# EUROPEAN PATENT SPECIFICATION

(11) **EP 3 420 443 B1**
(45) Date of publication and mention of the grant of the patent: **15.02.2023**
(21) Application number: 17810470.9
(22) Date of filing: 24.04.2017
(51) Int. Cl.: G06F 3/0488, G06F 3/0481, G06F 3/01, G06F 1/16

(54) **MOBILE DEVICE WITH TOUCH SCREENS AND METHOD OF CONTROLLING THE SAME**
MOBILE VORRICHTUNG MIT BERÜHRUNGSBILDSCHIRMEN UND VERFAHREN ZUR STEUERUNG DAVON
DISPOSITIF MOBILE AVEC ÉCRANS TACTILES ET SON PROCÉDÉ DE COMMANDE

(30) Priority: 08.06.2016 KR 20160071267
(43) Date of publication of application: 02.01.2019
(73) Proprietor: Samsung Electronics Co., Ltd., Suwon-si, Gyeonggi-do 16677 (KR)
(72) Inventor: KIM, Chakyum, Gyeonggi-go, 16677 (KR)
(74) Representative: Nederlandsch Octrooibureau
(86) International application number: PCT/KR2017/004333
(87) International publication number: WO 2017/213347

(56) References cited:
- US-A1- 2012 274 613
- US-A1- 2013 007 653
- US-A1- 2015 185 983
- US-A1- 2015 317 120
- US-A1- 2016 048 288

## Description

### [Technical Field]

The present disclosure relates generally to a mobile device including multiple touch screens, and more particularly, to a mobile device including multiple touch screens, which is capable of detecting, when the touch screens are opened with respect to each other, a touch applied to a rear touch screen whose image-display area is turned off.

### [Background Art]

In recent years, mobile devices have been developed to include multiple touch screens.

However, mobile devices including multiple touch screens consume more power than a single screen mobile device.

US 2015/0317120 A1 discloses an electronic device including a plurality of displays, and a display control module configured to output contents to the first display and at least one object associated with the contents to at least one other second display of the plurality of displays. US 2016/048288 A1 discloses an electronic device with a display to the front and a touch pad to the rear.

### [Disclosure of Invention]

### [Technical Problem]

Accordingly, the present disclosure is designed to address at least the problems and/or disadvantages described above and to provide at least the advantages described below.

Accordingly, an aspect of the present disclosure is to provide a mobile device including multiple touch screens, which detects, when the touch screens are opened with respect to each other, a touch applied to a rear touch screen whose image-display area is turned off, and a control method thereof.

### [Solution to Problem]

In accordance with an aspect of the present disclosure, a method is provided for controlling a mobile device including multiple touch screens, as claimed in claim 1.

In accordance with another aspect of the present disclosure, a mobile device including multiple touch screens is provided, as claimed in claim 6.

The invention is defined by the subject-matter of the independent claims. Particular embodiments of the invention are set out in the dependent claims. Examples and technical descriptions of apparatuses, products and/or methods in the description and/or drawings which are not covered by the claims are presented not as embodiments of the invention but as background art or examples useful for understanding the invention.

### [Advantageous Effects of Invention]

As described above, various embodiments and examples not including all the claimed features of the present invention are capable of configuring mobile devices with a number of touch screens as follows, and controlling the mobile devices:
A mobile device is configured in such a way as to include a number of touch screens, connected to each other with a hinge or a flexible PCB, and is capable of detecting, when the touch screens are opened with respect to each other, a touch applied to a rear touch screen whose image-display area is turned off. Various embodiments and examples not including all the claimed features of the present invention are capable of controlling the mobile device.

A mobile device is configured in such a way as to include a number of touch screens, connected to each other with a hinge or a flexible PCB, and is capable of detecting, when the touch screens are opened with respect to each other, a touch applied to a rear touch screen whose image-display area is turned off, reducing power consumption. Various embodiments and examples not including all the claimed features of the present invention are capable of controlling the mobile device.

A mobile device is configured in such a way as to include a number of touch screens, connected to each other with a hinge or a flexible PCB, and is capable of detecting, when the touch screens are opened with respect to each other, a touch applied to a visible touch detectable area of a rear touch screen whose image-display area is turned off, reducing power consumption. Various embodiments and examples not including all the claimed features of the present invention are capable of controlling the mobile device.

A mobile device is configured in such a way as to include a number of touch screens, connected to each other with a hinge or a flexible PCB, and is capable of detecting, when the touch screens are opened with respect to each other, a touch applied to a touch detectable area (or part) of a rear touch screen whose image-display area is turned off, reducing power consumption. Various embodiments of the present invention are capable of controlling the mobile device.

A mobile device is configured in such a way as to include a number of touch screens, connected to each other with a hinge or a flexible PCB, and is capable of detecting, when the touch screens are opened with respect to each other, a preset touch applied to a touch detectable area (or part) of a rear touch screen whose image-display area is turned off, reducing power consumption. Various embodiments and examples not including all the claimed features of the present invention are capable of controlling the mobile device.

It should be understood that the present invention is not limited to the embodiments and examples not including all the claimed features described above. Mobile devices may also be configured in such a way as to include a number of touch screens, connected to each other with a hinge or a flexible PCB, and is capable of detecting, when the touch screens are opened with respect to each other, a preset touch applied to a rear touch screen whose image-display area is turned off, reducing power consumption. Various embodiments and examples not including all the claimed features of the present invention are capable of controlling the mobile device.

### [Brief Description of Drawings]

The above and other aspects, features, and advantages of certain embodiments and examples not including all the claimed features of the disclosure will be more apparent from the following detailed description, taken in conjunction with the accompanying drawings, in which:
FIGs. 1A to 1D are views illustrating a mobile device according to an embodiment of the present disclosure;
FIGs. 2A and 2B are schematic block diagrams of mobile devices according to embodiments and examples not including all the claimed features of the present disclosure;
FIG. 3 is a flowchart illustrating a method of controlling a mobile device according to an embodiment of the present disclosure;
FIGs. 4A to 4E illustrate a method of controlling a mobile device according to an embodiment and examples not including all the claimed features of the present disclosure;
FIGs. 5A and 5B illustrate a method of controlling a mobile device according to an embodiment and examples not including all the claimed features of the present disclosure;
FIGs. 6A and 6B illustrate a method of controlling a mobile device according to an embodiment and examples not including all the claimed features of the present disclosure;
FIGs. 7A and 7B are illustrate a method of controlling a mobile device according to an embodiment and examples not including all the claimed features of the present disclosure; and
FIGs. 8A and 8B illustrate a method of controlling a mobile device according to an embodiment and examples not including all the claimed features of the present disclosure.

### [Mode for the Invention]

The following description with reference to the accompanying drawings is provided to assist in a comprehensive understanding of various embodiments and examples not including all the claimed features of the present disclosure as defined by the claims and their equivalents. It includes various specific details to assist in that understanding but these are to be regarded as merely exemplary. Accordingly, those of ordinary skill in the art will recognize that various changes and modifications of the various embodiments and examples not including all the claimed features described herein can be made without departing from the scope and spirit of the present disclosure. In addition, descriptions of well-known functions and constructions may be omitted for clarity and conciseness.

The same reference numbers are used throughout the drawings to refer to the same or similar parts.

The terms and words used in the following description and claims are not limited to the bibliographical meanings, but are used by the inventor to provide a clear and consistent understanding of the present disclosure. Accordingly, those skilled in the art will understand that the following description of various embodiments and examples not including all the claimed features of the present disclosure is provided for illustration purpose only and not for the purpose of limiting the present disclosure as defined by the appended claims and their equivalents.

Singular forms are intended to include plural forms unless the context clearly indicates otherwise.

The expressions, such as "include", "have", and "may include", denote the presence of the disclosed characteristics, numbers, components, functions, operations, constituent elements, or a combination thereof, but do not exclude the existence of or a possibility of addition of one or more other characteristics, numbers, components, functions, operations, and constituent elements. ,

Furthermore, the expression "and/or" includes any and all combinations of the associated listed words. For example, the expression "A and/or B" may include A, may include B, or may include both A and B.

The term "application" refers to an application program, app, or application software, which runs on Operating Systems (OS) for computers or mobile devices and are used by users. Examples of an application include a web browser, a camera application, a mobile payment application (or electronic payment application, payment application, etc.), a photo album application, a word processor, a spreadsheet, a contacts application, a calendar application, a memo application, an alarm application, a Social Network System (SNS) application, a call application, a game store, a game application, a chat application, a map application, a music player, a video player, etc.

The term "application also refers to an application program, app, or application software that runs on a mobile device or an external device (e.g., a wearable device, a server, etc.) connected to mobile devices in wireless or wired mode..

The term "content" refers to data, information, etc., which is executed or displayed on the screen as a corresponding application runs. Examples of content include a video file or an audio file that is played back by a video player as an application, a game file that is executed by a game application, a music file played back by a music player, a photo file displayed by a photo album application, a web file displayed by a web browser, payment information (e.g., a mobile card number, loan payment, a brand name, a service name, a store name, etc.) displayed by an electronic payment application, a call screen displayed by a call application, etc. For example, a call screen may be configured to include a caller phone number or caller identifier (ID), a caller name, a call start time, a caller video (or caller image) by a video call, etc.

Content may also include an executed application screen and a user interface configuring an application screen. Content may also include one or more pieces of content.

The term "widget" refers to a mini application or as a Graphic User Interface (GUI), which is capable of supporting the interaction between a user and an application/OS. Examples of a widget include a weather widget, a calculator widget, a clock widget, etc.

The expression "user input" refers to a user button (or key) selection, a user button (or key) press, a user button (or key) touch, a user touch or touch gesture applied to (detected via a touch screen), etc. Examples of a user touch or touch gesture are a non-contact gesture such as a hovering action, a voice command, a user's presence, a user's motion. A user's presence refers to the presence of a user within a range of camera recognition.

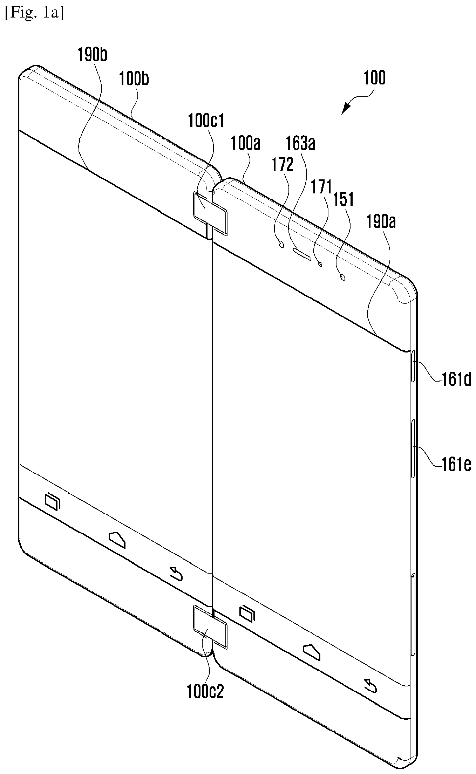

FIGs. 1A to 1D are views illustrating a mobile device according to an embodiment of the present disclosure.

Referring to FIG. 1A, the mobile device 100 includes a first housing 100a and a second housing 100b, which are connected to each other, side-by-side, by hinges 100c 1 and 100c2 or a flexible plastic (e.g., a flexible printed circuit board (PCB)). The first housing 100a and the second housing 100b may change locations with each other. A structure or a support for connecting the first housing 100a and the second housing 100b is not limited to the hinges 100c1 and 100c2, and may include various types of structures or supports for connecting the first housing 100a and the second housing 100b.

The first housing 100a and the second housing 100b include a first touch screen 190a and a second touch screen 190b, at the center part, on the front side, respectively. The first touch screen 190a and the second touch screen 190b are spaced apart from each other, at a distance (e.g., less than the thickness of the first housing 100a), by the hinges 100c1 and 100c2.

The first touch screen 190a and the second touch screen 190b are designed in such a way that the surface is flat and the edges and corners are curved. The curved edges of the first touch screen 190a and the second touch screen 190b may make the user view the interval between the first touch screen 190a and the second touch screen 190b as if the interval is narrow.

The first touch screen 190a and the second touch screen 190b may change locations with each other.

Alternatively, the mobile device 100 may include one housing which is flexible, e.g., foldable.

The first housing 100a includes, at the top, on the front side, a first camera 151 for taking a still image or a video, a proximity sensor 171 for detecting an approach of a user or an object, an illuminance sensor 172 for detecting ambient illuminance, and a first speaker 163a for outputting a voice and/or sound outside the mobile device 100.

The first housing 100a also includes a second speaker(not shown) at the bottom on the front side for outputting a voice and/or sound outside the mobile device 100.

The first housing 100a may include one button or a number of buttons at the bottom on the front side. The buttons may be physical buttons or may be implemented with touch buttons located inside or outside the first touch screen 190a.

The first housing 100a includes a power/lock button 161d and a volume button 161e on the side thereof.

The first housing 100a includes a microphone(not shown) and a connector (not shown), e.g., a universal serial bus (USB) connector, at the bottom on the side.

The second housing 100b may include, at the top, on the front side, a second camera for taking a still image or a video, and a third speaker for outputting a voice and/or sound outside the mobile device 100. The second housing 100b may also include, at the bottom, a fourth speaker for outputting a voice and/or sound outside the mobile device 100.

The second housing 100b may also include one button or a number of buttons at the bottom. The buttons may be physical buttons or may be implemented with touch buttons located inside or outside the second touch screen 190b.

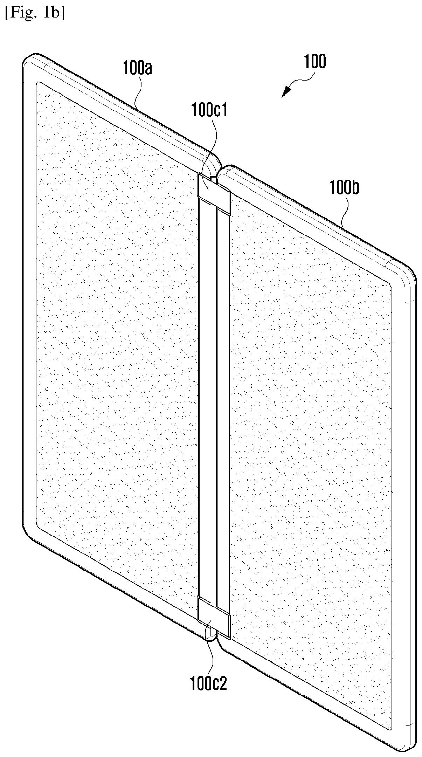

Referring to FIG. 1B, the mobile device 100 may include a separate speaker for outputting a voice and/or sound, on a rear side of the first housing 100a and/or a rear side of the second housing 100b. The mobile device 100 may also include a separate camera for taking a still image or a video, on a rear side of the first housing 100a and/or a rear side of the second housing 100b.

The mobile device 100 may include a slot for an input pen (stylus pen) at the bottom of the rear side of the first housing 100a and/or at the bottom of the rear side of the second housing 100b.

The mobile device 100 may be modified by replacement, addition, and removal with respect to at least one of the components, according to the performance and structure of the mobile device 100. The components of the mobile device 100 may also vary in location according to the performance or structure of the mobile device 100.

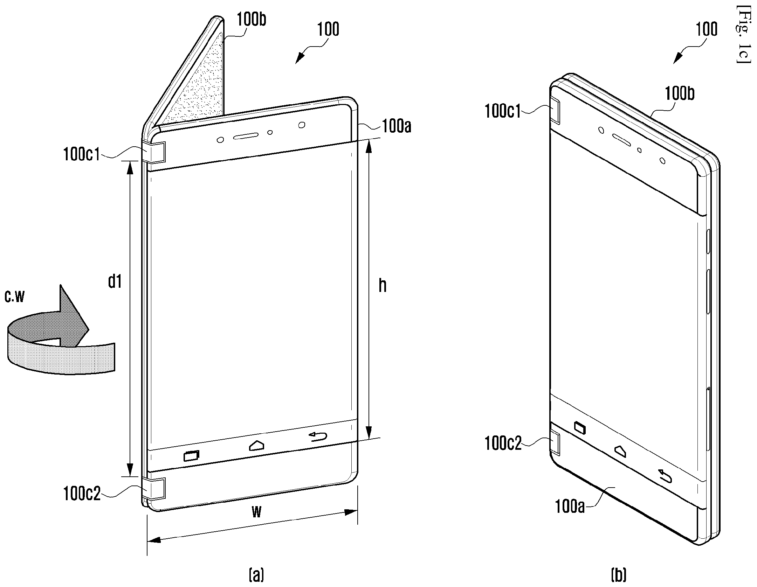

Referring to FIG. 1C, in diagram (b), the first housing 100a and the second housing 100b of the mobile device 100 are in an open state where an angle between the first housing 100a and the second housing 100b is 360°. Referring again to FIG. 1A, the first housing 100a and the second housing 100b of the mobile device 100 are in a spread state where an angle between the first housing 100a and the second housing 100b is 180°.

Herein, if one of the first housing 100a and the second housing 100b in a spread state is rotated with respect to the other, e.g., as illustrated in FIG. 1C, they are referred to as being in an open state.

The first housing 100a and the second housing 100b may be rotated with respect to each other (for example, opened from or closed to) by hinges 100c1 and 100c2 or a flexible PCB within a range of 0° to 360°.

Referring again to diagram (b) of FIG. 1C, when the first housing 100a and the second housing 100b are in an open state, the rear sides of the first housing 100a and the second housing 100b are in parallel or face each other (e.g., the angle between the rear sides of the first housing 100a and the second housing 100b is less than or equal to 4°). The rear sides of the first housing 100a and the second housing 100b may contact each other or may be spaced apart from each other at a preset interval (e.g., 3 mm or less than 3 mm).

The hinges 100c1 and 100c2 are located at both ends of the first housing 100a and the second housing 100b, spaced apart from each other at an interval d1. The interval d1 between the hinge 100c1 and 100c2 may be greater than the height (length) h of the first touch screen 190a. The interval d1 between the hinge 100c1 and 100c2 may be greater than the width w of the first touch screen 190a.

Although the heights of the first touch screen 190a and the height of the second touch screen 190b are less than the interval d1 in FIG. 1C, the present disclosure is not limited thereto. Alternatively, the heights of the first touch screen 190a and the height of the second touch screen 190b may be greater than the interval d1.

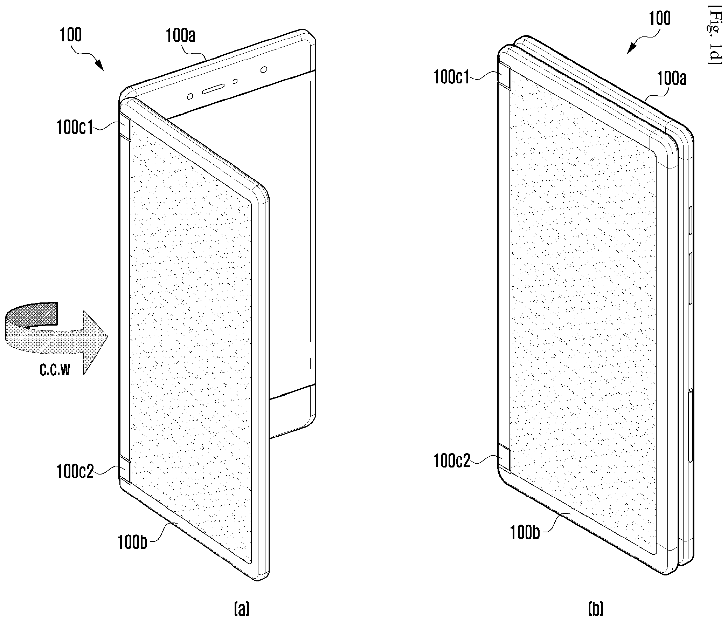

Referring to FIG. 1D, the first housing 100a and the second housing 100b of the mobile device 100 are folded into a closed state, where the angle between the first housing 100a and the second housing 100b is 0°, 0° ± 3° or less than ± 3°).

In diagram (a) of FIG. 1D, at least one of the first housing 100a and the second housing 100b in a spread state is rotated with respect to the other housing into a closed state, as illustrated in diagram (b) of FIG. 1D.

The first housing 100a and/or the second housing 100b may be closed with respect to each other by the hinges 100c1 and 100c2 or a flexible PCB located between the first housing 100a and the second housing 100b.

When the first housing 100a and the second housing 100b are in a closed state, the front sides of the first housing 100a and the second housing 100b are in parallel or face each other (e.g., the angle between the rear sides of the first housing 100a and the second housing 100b is less than or equal to 4°). The front sides of the first housing 100a and the second housing 100b may contact each other or may be spaced apart from each other at a preset interval (e.g., 3 mm or less than 3 mm).

Although the embodiments and examples not including all the claimed features of the present disclosure are illustrated such that the touch screens are shaped as rectangles, the present disclosure is not limited thereto. For example, the touch screens may vary in shape and/or arrangement.

Alternatively, unlike the embodiment illustrated in FIG. 1A, the first housing 100a and the second housing 100b may be connected by one hinge. For example, the one hinge may be located between a side edge of the first touch screen 190a of the first housing 100a and a side edge of the second touch screen 190b of the second housing 100b.

As yet another alternative, the first housing 100a and the second housing 100b may be connected by three or more hinges.

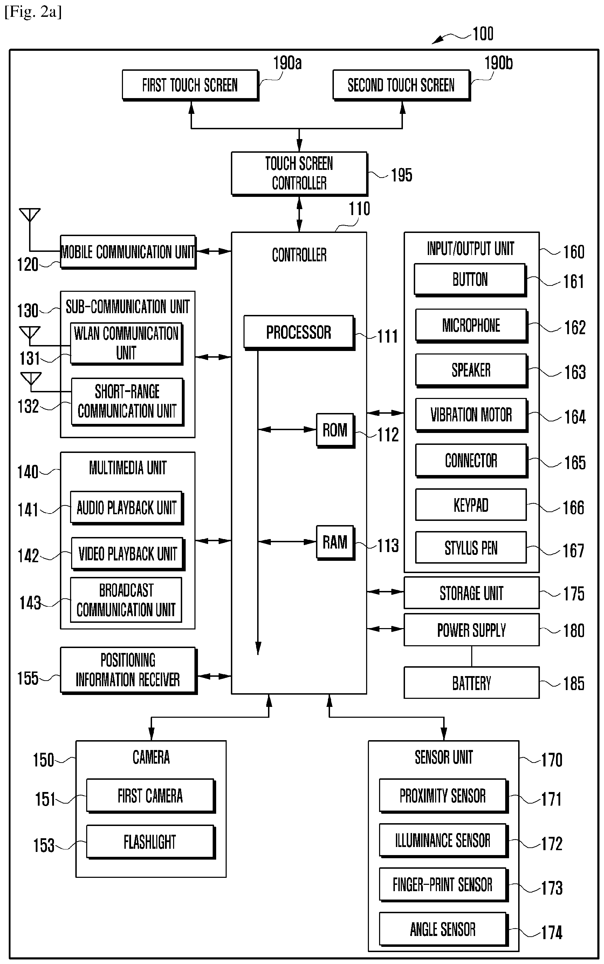

FIG. 2A illustrates a mobile device according to an embodiment and example not including all the claimed features of the present disclosure.

Referring to FIG. 2A, the mobile device 100 includes a controller 110, the mobile communication unit 120, the sub-communication unit 130, a multimedia unit 140, a camera 150, a positioning information receiver 155, an input/output unit 160, a connector 165, a sensor unit 170, a storage unit 175, a power supply 180, a first touch screen 190a, a second touch screen 190b, and a touch screen controller 195.

The mobile device 100 is capable of functionally connecting to another device (e.g., another mobile device, a server, etc.) via at least one of the mobile communication unit 120, the sub-communication unit 130, and the connector 165.

The mobile device 100 is capable of transmitting/receiving data to/from outside, using the first touch screen 190a and the second touch screen 190b, via the communication unit 120 or the sub-communication unit 130. The mobile device 100 is capable of transmitting/receiving data to/from outside, using a stylus pen 167, the first touch screen 190a and the second touch screen 190b, via the communication unit 120 or the sub-communication unit 130.

The mobile device 100 is capable of transmitting/receiving data to/from outside, according to a user input (e.g., touch, etc.) applied to the first touch screen 190a and the second touch screen 190b, via the communication unit 120 or the sub-communication unit 130.

The controller 110 includes a processor 111, a read only memory (ROM) 112, and a random access memory (RAM) 113. The ROM 112 stores a control program for controlling the mobile device 100, and the RAM 113 stores data or signals received from the outside of the mobile device 100 or for serving as a space for storing tasks/jobs executed in the mobile device 100.

The controller 110 controls all the operations of the mobile device 100 and the signals flowing among components 120 to 195 in the mobile device 100, and processes data. The controller 110 controls the power supply 180 to supply power to the components 120 to 195.

The controller 110 is capable of controlling the mobile communication unit 120, the sub-communication unit 130, the multimedia unit 140, the camera 150, the positioning information receiver 155, the input/output unit 160, the sensor unit 170, the storage unit 175, the power supply 180, the first touch screen 190a, the second touch screen 190b and the touch screen controller 195.

The processor 111 may also include a graphic processing unit (GPU) for processing graphic data, a sensor processor for controlling sensors, and/or a communication processor for controlling communication.

The processor 111 may be implemented as a system on chip (SoC) including a core (and a GPU. The processor 111 may include a single core, a dual core, a triple core, a quad core, or a multi-core.

The processor 111, the ROM 112, and the RAM 113 are connected to each other via bus.

The mobile communication unit 120 connects the mobile device 100 to other devices (e.g., another mobile device, a server, etc.), via a mobile communication network, using one or more antennas, under the control of the controller 110.

The sub-communication unit 130 is connects the mobile device 100 to other devices (e.g., another mobile device, a server, etc.), via a wireless local area network (WLAN) communication unit 131 and/or a short-range communication unit 132, using one or more antennas, under the control of the controller 110. The sub-communication unit 130 may include an antenna for WLAN, an antenna for magnetic secure transmission (MST) for electronic payment, and/or an antenna for near field communication (NFC).

A WLAN communication unit 131 wirelessly connects the mobile device 100 to an access point (AP) under the control of the controller 110. The WLAN communication unit 131 may support Wi-Fi communication.

Examples of the short-range communication provided by the short-range communication unit 132 may include Bluetooth communication, Bluetooth low energy (BLE) communication, infrared data association (IrDA) communication, ultra-wideband (UWB) communication, MST communication, NFC communication, etc.

The multimedia unit 140 performs audio playback, video playback, and/or broadcast playback, under the control of the controller 110.

The audio playback unit 141 may play back an audio source (e.g., audio files whose file extensions have mp3, wma, ogg or wav), stored in the storage unit 175 or received from outside, using an audio codec, under the control of the controller 110.

The audio playback unit 141 may play back auditory feedback, in response to commands and/or inputs received in the mobile device 100.

The video playback unit 142 may play back a digital video source (e.g., video files whose file extensions have mpeg, mpg, mp4, avi, mov, or mkv), stored in the storage unit 175 or received from outside, using a video codec, under the control of the controller 110.

The video playback unit 142 may play back visual feedback, in response to commands and/or inputs received in the mobile device 100.

The broadcast communication unit 143 receives a broadcast signal (e.g., a television (TV) broadcast signal, a radio broadcast signal, or a data broadcast signal), and broadcast additional information (e.g., electronic program guide (EPG) or electronic service guide (ESG), broadcast from a broadcasting station, via an antenna, under the control of the controller 110.

Alternatively, the multimedia unit 140 may omit certain units, e.g., the broadcast communication unit 143, according to the performance or the structure of the mobile device 100. Additionally, the controller 110 may include the audio playback unit 141 and/or the video playback unit 142 of the multimedia unit 140.

The camera 150 takes still images and/or videos, under the control of the controller 110. The camera 150 includes a first camera 151 located on the front side of the first housing 190a. The camera 150 may also include a second camera on the second housing 190b. The first camera 151 and/or the second camera may include an auxiliary light source (e.g. a flashlight 153) for providing an amount of light corresponding to the illumination of scenes to be photographed.

The camera 150 may also include an additional camera (e.g., a third camera) adjacent to the first camera 151 (e.g., where the interval between the two optical axes is greater than 5 mm and less than 80 mm). The camera 150 may also include the first camera 151 and a third camera integrally formed into a single unit. The controller 110 may take 3-dimensional (3D) still images and/or videos, using the first camera 151 and the third camera.

The camera 150 may also include a second camera located on the front side of the first housing 190a and a fourth camera adjacent to the second camera (e.g., where the interval between the two optical axes is greater than 5 mm and less than 80 mm). The second camera and the fourth camera may be integrally formed into a single unit. The controller 110 may take 3D still images and/or videos using the second and the fourth cameras.

The camera 150 may perform wide-angle photography, telephotography, and/or macrophotography, using an additional lens that is detachably coupled to the mobile device 100, e.g., using a separate adaptor.

The positioning information receiver 155 periodically receives signals (e.g., global positioning system (GPS) satellite orbital information, GPS satellite time information, a navigation message, etc.).

In an indoor environment, the mobile device 100 may obtain its location or moving velocity using a wireless AP, e.g., using a cell-ID method, an enhanced cell-ID method, or an angle of arrival (AoA) method. In an indoor environment, the mobile device 100 is also capable of obtaining its location or moving velocity, using a wireless beacon.

The input/output unit 160 includes a button 161, a microphone 162, a speaker 163, a vibration motor 164, a connector 165, a keypad 166, and a stylus pen 167.

The button 161 may include the power/lock button 161e and the volume buttons 161d located on the side of the mobile device 100 illustrated in FIG. 1A. The button 161 may include physical buttons located at the bottom on the front side of the mobile device 100 (or touch buttons displayed on the touch screens 190a and/or 190b, in a form of text, image, and/or icon), such as a home button, a recently executed app button, and/or a return button.

The controller 110 receives an electrical signal from the button 161 according to a user input. The controller 110 detects a user input using the received signal (e.g., a signal created by pressing the button 161, a signal by contacting the button 161).

The form, location, function, name, etc., of the buttons described herein are only examples for the description of the present disclosure, and the present disclosure is not limited thereto.

The microphone 162 receives a voice or sound from the outside, and creates electrical signals, under the control of the controller 110. The audio codec converts the electrical signals of the microphone 162 to audio signals and stores/outputs the converted signals in the storage unit 175/to the speaker 163, under the control of the controller 110.

The microphones 162 may be installed at the front side, lateral side, and/or rear side of the first housing 190a and/or the second housing 190b of the mobile device 100.

The speaker 163 outputs sound corresponding to various signals (e.g., a wireless signal, a broadcast signal, audio source, video file, photographing, etc.) decoded by an audio codec, under the control of the controller 110.

A number of speakers 163 may be installed at the front side, lateral side, and/or rear side of the mobile device 100.

The speaker 163 may play back auditory feedback, in response to the reception of commands and/or user inputs in the mobile device 100.

The vibration motor 164 converts an electrical signal to a mechanical vibration, under the control of the controller 110. The vibration motor 164 may be implemented with a linear vibration motor, a bar type vibration motor, a coin type vibration motor, or a piezoelectric element vibration motor.

One or more vibration motors 164 may be installed in the first housing 100a or the second housing 100b of the mobile device 100.

The vibration motor 164 may output tactile feedback, in response to the reception of commands and/or user inputs in the mobile device 100. The vibration motor 164 is capable of providing various types of tactile feedback (e.g., the intensity of vibration intensity, the duration of vibration), which are stored in the storage unit or received from the outside, based on a control instruction of the controller 110.

The connector 165 serves as an interface connecting the mobile device 100 and an external device or a power source, e.g., charger. The connector 165 may include a micro USB type connector or a USB-C type connector.

The mobile device 100 may also transmit data (e.g., content) stored in the storage unit 175 to the outside or receiving data from the outside, via a cable connected to the connector 165, under the control of the controller 110. The mobile device 100 may receive power from a power source and/or charge the battery 185 via a cable connected to the connector 165, under the control of the controller 110.

The keypad 166 receives user inputs for controlling the mobile device 100. The keypad 166 may include a virtual keypad displayed on the first touch screen 190a and/or the second touch screen 190b or a physical keypad installed at the front side of the mobile device 100. The keypad 166 may further include a separate keypad that is connected to the mobile device in wired mode or wireless mode (e.g., short-range communication).

The input pen (stylus pen) 167 is designed to be pushed into/pulled out of the first housing 100a or the second housing 100b of the mobile device 100. The stylus pen 167 may be used by the user to select (or touch) an object and/or content configuring a screen of a handwriting/drawing application displayed on the touch screen 190a or 190b of the mobile device 100; or perform handwriting, drawing, painting and/or sketching, on the screen. Examples of a screen are a memo screen, notepad screen, calendar screen, etc. Examples of an object are a menu, text, image (or electronic card, etc.), video, diagram, icon and shortcut icon. Examples of content are a text file, image file, audio file, video file, payment information or web page.

The sensor unit 170 may detect states of the mobile device 100 and/or the ambient states of the mobile device 100. The sensor unit 170 includes one or more sensors. The sensor unit 170 includes a proximity sensor 171 for detecting whether a user approaches the mobile device 100; an illuminance sensor 172 for detecting the intensity of the ambient light of the mobile device 100; a finger-print sensor 173 for scanning a user's fingerprint; and an angle sensor 174 for detecting an angle between the first housing 190a and the second housing 190b.

The proximity sensor 171 and the illuminance sensor 172 may be installed to the front side of the first housing 190a and/or the front side of the second housing 190b.

The fingerprint sensor 173 may be located at a physical button located on the front side of the first housing 190a or the second housing 190b, or a separate physical button located at the rear side of the first housing 190a or the second housing 190b. The fingerprint sensor 173 may also scan a user's fingerprint via part of the first touch screen 190a of the mobile device 100 (e.g., an area adjacent to a home button) and part of the second touch screen 190b (e.g., an area adjacent to a home button).

The angle sensor 174 (or a tilt sensor, etc.) is located at the hinges 100c1 and 100c2 of the mobile device 100 and detects a signal (e.g., current, voltage, resistance, etc.) corresponding to an angle between the first housing 100a and the second housing 100b. Alternatively, the angle sensor 174 is located at the first housing 100a or the second housing 100b of the mobile device 100 and detects a signal corresponding to an angle between the first housing 100a and the second housing 100b. Alternatively, the angle sensor 174 is located at the flexible PCB of the mobile device 100 and detects a signal corresponding to an angle between the first housing 100a and the second housing 100b. The angle sensor 174 converts the detected signal into an electrical signal and transfers the converted signal to the controller 110. The controller 110 calculates an angle of 0° to 360°, based on the converted signal from the angle sensor 174.

The angle sensor 174 may be implemented with a terrestrial magnetism sensor or a gyro sensor. The angle sensor 174 may include a hinge type angle sensor rotating by an angle between the first housing 100a and the second housing 100b.

If the first touch screen 190a and the second touch screen 190b are installed in one flexible housing, the controller 110 may calculate an angle between the first touch screen 190a and the second touch screen 190b, using the angle sensor 174. If the mobile device is implemented with multiple flexible housings, the controller 110 may calculate an angle between the flexible housings, using a bending sensor or a pressure sensor.

The sensor unit 170 may further include an acceleration sensor, a gyro sensor, a gravity sensor, an altimeter, a biometric signal sensor (e.g., a heart-rate sensor), etc.

The sensors included in the sensor unit 170 detect states of the mobile device 100 and the user, create electrical signals corresponding to the detected results, and transfer the created signals to the controller 110. The sensor unit 170 may be modified through addition, alteration, replacement, or removal of sensors, according to the performance of the mobile device 100.

The storage unit 175 may store signals or data corresponding to operations of the communication unit 120, the sub-communication unit 130, the multimedia unit 140, the camera 150, the positioning information receiver 155, the input/output unit 160, the sensor unit 170, and the touch screens 190a and 190b, under the control of the controller 110. The storage unit 175 is also capable of storing control programs related to the control of the mobile device 100 or the controller 110, GUIs related to applications provided by mobile device manufactures or downloaded from the outside, images corresponding to the GUIs, user information, documents, databases, data related thereto, etc.

The storage unit 175 may store visual feedback (e.g., a video source, etc.), output in response to received commands and/or inputs, so that the user can recognize the visual feedback; auditory feedback (e.g., a sound source, etc.) output via the speaker 163 so that the user can recognize the auditory feedback; and tactile feedback (e.g., a haptic pattern, etc.), output via a vibration motor 164 so that the user can recognize the tactile feedback.

The storage unit 175 may store a duration for providing the feedback to a user (e.g., 500 ms).

The storage unit 175 may include a memory card (e.g., a micro SD card, memory stick, etc.), a non-volatile memory, a volatile memory, a hard disk drive (HDD), a solid state drive (SSD), etc.

The power supply 180 supplies power to the components 110 to 195 of the mobile device 100, under the control of the controller 110. The power supply 180 may receive power from an external power source via a cable connected to the connector 165, and supply power to components of the mobile device 100, under the control of the controller 110.

The power supply 180 may charge one or more batteries 185, under the control of the controller 110.

The power supply 180 may supply power from the battery 185 to an accessory via a cable. Alternatively, the power supply 180 may wirelessly charge other devices (e.g., another mobile device or an accessory), via a transmission coil connected to the battery 185, under the control of the controller 110. Examples of the wireless charging are magnetic resonance charging, electromagnetic charging, and magnetic induction charging.

The first and second touch screens 190a and 190b are capable of providing a user with GUIs corresponding to various services (e.g., voice call, video call, data transmission, broadcast reception, photographing, video viewing, electronic payment, mobile payment, etc.). The first and second touch screens 190a and 190b each include a display panel for showing screens and a touch panel receiving user inputs (e.g., touches, etc.). Alternatively, the first and second touch screens 190a and 190b each include an edge display panel for showing screens and an edge touch panel receiving user inputs (e.g., touches, etc.).

The first and second touch screens 190a and 190b may transfer analog signals corresponding to a single touch or multi-touches, received via GUIs or a home screen, to the touch screen controller 195. The first and second touch screens 190a and 190b may receive a single touch or multi-touches, via part of a user's body (e.g., fingers) or the stylus pen 167.

The first touch screen 190a may output visual feedback in response to reception on a command and/or input via the second touch screen 190b.

The touch screen controller 195 converts analog signals, corresponding to a single touch or multi-touches applied to the first and second touch screens 190a and 190b, into digital signals, and transfers the converted signals to the controller 110. The controller 110 calculates X- and Y-coordinates of each of the touch locations on the first and second touch screens 190a and 190b, using the digital signals output from the touch screen controller 195.

The controller 110 may control the first and second touch screens 190a and 190b, using the digital signals output from the touch screen controller 195. For example, the controller 110 may distinguished a touched a shortcut icon displayed on the first and second touch screens 190a and 190b, from another displayed shortcut icon, or may execute an application (e.g., a game application) corresponding to a selected shortcut icon and display the application screen (i.e., the game application screen) on the first and second touch screens 190a and 190b.

The mobile device 100 illustrated in FIGs. 1A to 1D and FIG. 2A may be modified through addition, alteration, replacement, or removal of components, according to the performance of the mobile device 100.

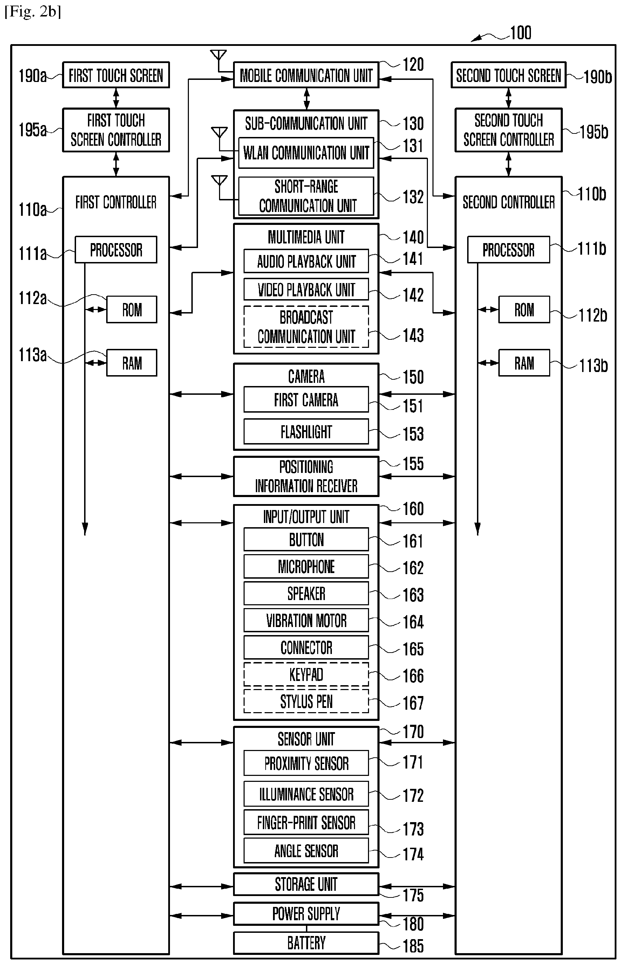

FIG. 2B illustrates a mobile device according to an embodiment and example not including all the claimed features of the present disclosure. Specifically, the mobile device illustrated in FIG. 2B is configured in the same way as the mobile device illustrated in FIG. 2A, except that each touch screen includes its own touch screen controller and controller. Accordingly, instead of a controller 110 and a touch screen controller 195, the mobile device illustrated in FIG. 2B includes a first controller 110a, a second controller 110b, a first touch screen controller 195a, and a second touch screen controller 195b. A detailed description regarding the same components illustrated in FIG. 2A will be omitted below.

Referring to FIG. 2B, the first controller 110a includes a first processor 111a, a first ROM 112a for storing a control program for controlling the mobile device 100, and a first RAM 113a for storing data or signals received from the outside of the mobile device 100 or serving as a space for storing jobs/tasks executed in the mobile device 100.

The first controller 110a may control the mobile communication unit 120, the sub-communication unit 130, the multimedia unit 140, the camera 150, the positioning information receiver 155, the input/output unit 160, the sensor unit 170, the storage unit 175, the power supply 180, the first touch screen 190a, and the first touch screen controller 195a.

The first touch screen controller 195a converts analog signals corresponding to one or more touches applied to the first touch screen 190a into digital signals (e.g., X- and Y-coordinates) and transfers the digital signals to the first controller 110a. The first controller 110a may control the first touch screen 190a, using the digital signals received from the first touch screen controller 195a. Alternatively, the first touch screen controller 195a may be included in the first controller 110a.

The second controller 110b includes a second processor 111b, a second ROM 112b for storing a control program for controlling the mobile device 100, and a second RAM 113b for storing data or signals received from the outside of the mobile device 100 or serving as a space for storing jobs/tasks executed in the mobile device 100.

The second controller 110b may control the mobile communication unit 120, the sub-communication unit 130, the multimedia unit 140, the camera 150, the positioning information receiver 155, the input/output unit 160, the sensor unit 170, the storage unit 175, the power supply 180, the second touch screen 190b, and the second touch screen controller 195b.

The second touch screen controller 195b converts analog signals corresponding to one or more touches applied to the second touch screen 190b into digital signals (e.g., X- and Y-coordinates) and transfers the digital signals to the second controller 110b. The second controller 110b may control the second touch screen 190b, using the digital signals received from the second touch screen controller 195b. Alternatively, the second touch screen controller 195b may be included in the second controller 110b.

The first controller 110a may control at least one component that can be installed at the first housing 100a, such as the first touch screen 190a, the first touch screen controller 195a, the mobile communication unit 120, the sub-communication unit 130, the multimedia unit 140, the first camera 151, the positioning information receiver 155, the button 161, the sensor unit 170, the storage unit 175, and the power supply 180.

Similarly, the second controller 110b may control at least one component that can be installed to the second housing 100b where the second controller 110b is located, such as the second touch screen 190b, the second touch screen controller 195b, a second camera, the storage unit 175, and the power supply 180.

Alternatively, the first controller 110a and the second controller 110b may control the mobile device 100 based on units of components. For example, the first controller 110a controls the mobile communication unit 120, the sub-communication unit 130, and the input/output unit 160, while the second controller 110b controls the multimedia unit 140, the camera 150, the positioning information receiver 155, and the sensor unit 170.

The first controller 110a and the second controller 110b may control components based on priority. For example, the first controller 110a preferentially controls the mobile communication unit 120 and the second controller 110b preferentially controls the multimedia unit 140.

While the embodiment and example not including all the claimed features of FIG. 2B is implemented in such a way that the first controller 110a and the second controller 110b are installed to the first housing 100a and the second housing 100b, respectively, as an alternative, the first controller 110a and the second controller 110b may be installed in one housing, e.g., the first housing 100a.

Alternatively, the first controller 110a and the second controller 110b may be integrated into a single processor with a number of cores (e.g., dual core, quad core, etc.).

Alternatively, the first touch screen 190a and the second touch screen 190b may be installed to one flexible housing, where the first touch screen 190a and the second touch screen 190b are spaced apart from each other by an interval sufficient for an angle between the first touch screen 190a and the second touch screen 190b to be detected.

The flexible housing may include a flexible display. The flexible housing or the flexible display may include part or all of the components 110 to 195 shown in FIGs. 1A to 1D and FIGs. 2A and 2B. Since the flexible housing and the flexible display have the same components as the mobile device 100, a detailed description is omitted.

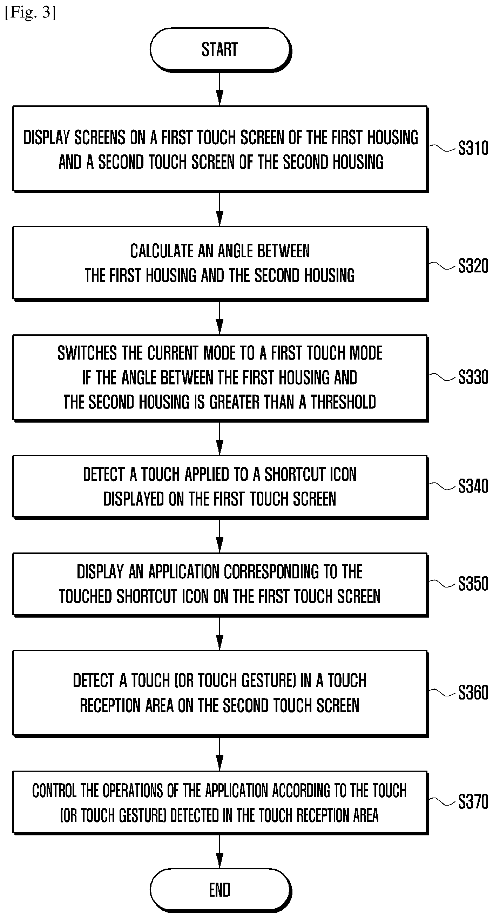

FIG. 3 is a flowchart illustrating a method of controlling a mobile device according to an embodiment of the present disclosure.

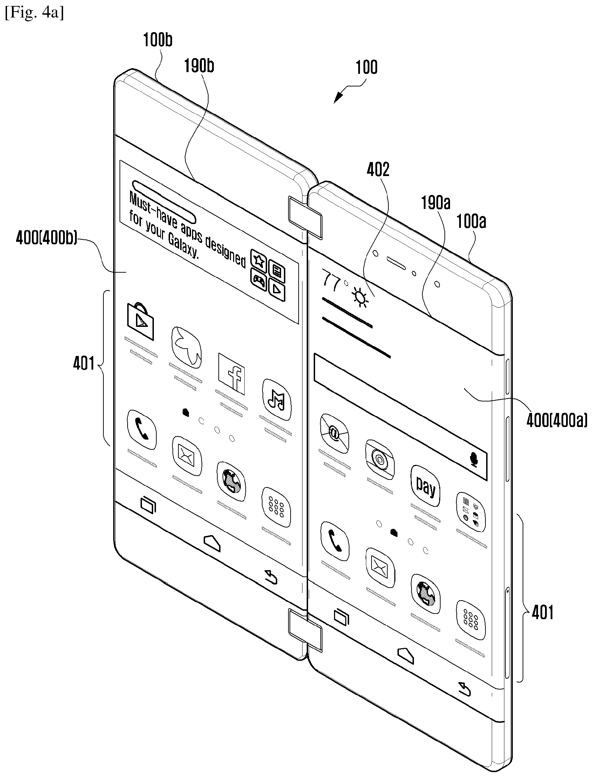

FIGs. 4A to 4E illustrate a method of controlling a mobile device according to an embodiment and examples not including all the claimed features of the present disclosure.

Referring to FIG. 3, in step S310, the mobile device displays a home screen on a first touch screen of a first housing and a second touch screen of a second housing.

Referring to FIG. 4A, the mobile device 100 displays a home screen 400 on the first touch screen 190a and the second touch screen 190b. The home screen 400 includes a first home screen 400a that is displayed on the first touch screen 190a, and a second home screen 400b, which is connected to the first home screen 400a, displayed on the second touch screen 190b.

The home screen 400 may include a status bar, shortcut icons 401, a widget 402, etc.

Although the home screen 400 is displayed on the first touch screen 190a and the second touch screen 190b, the present disclosure is not limited thereto. The mobile device 100 may also display an executed application screen on the first touch screen 190a and the second touch screen 190b. For example, the mobile device 100 may extend and display a single window according to the execution of a single application across the first touch screen 190a and the second touch screen 190b. Alternatively, the mobile device 100 may display application screens (windows) according to the execution of applications on the first touch screen 190a and the second touch screen 190b, respectively. Alternatively, the mobile device 100 may display a home screen and an application screen (window) on the first touch screen 190a and the second touch screen 190b, respectively.

Referring again to FIG. 3, in step S320, the mobile device calculates an angle between the first housing and the second housing.

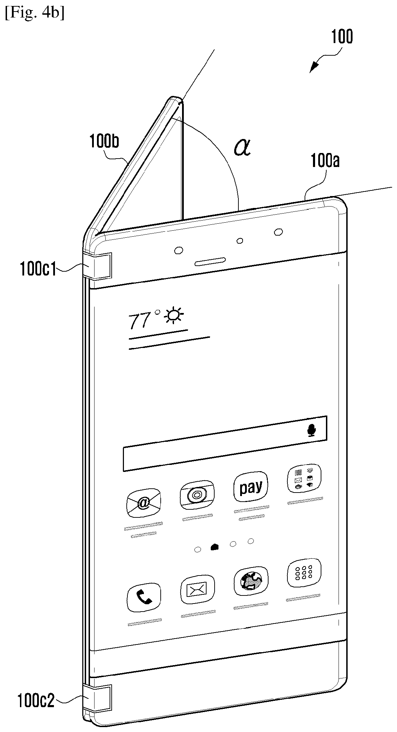

Referring to FIG. 4B, one of the first housing 100a and the second housing 100b of the mobile device 100 is rotated with respect to the other. The user of the mobile device 100 rotates one of the first housing 100a and the second housing 100b with respect to the other, so that the rear sides of the first housing 100a and the second housing 100b come closer to each other. when the second housing 190b and the first housing 190a are in a spread state, as illustrated in FIG. 4A, the user can rotate the second housing 190b with respect to the first housing 190a in the counter-clockwise direction. Alternatively, the user can rotate the first housing 190a with respect to the second housing 190b in the clockwise direction.

The controller 110 may calculate an angle between the first housing 100a and the second housing 100b, using the angle sensor 174. The angle sensor 174 may output a signal corresponding to an angle of 0° to 360°.

The controller 110 may automatically or according to a user input calculate an angle between the first housing 100a and the second housing 100b using the sensor unit 170.

A user of the mobile device 100 can input an angle formed by the touch screens 190a and 190b by selecting an object (e.g., icon or text, etc.) displayed on the touch screens 190a and 190b, corresponding to various angles of the mobile device 100. For example, an object corresponding to a mobile device in a closed state, e.g., as illustrated in diagram (b) of FIG. 1D, may indicate that the angle between the first housing 100a and the second housing 100b is 0°. An object corresponding to a mobile device in a spread state, e.g., as illustrated in FIG. 1A, may indicate that the angle between the first housing 100a and the second housing 100b is 180°. An object corresponding to a mobile device in an open state, as illustrated in diagram (b) of FIG. 1C, may indicate that the angle between the first housing 100a and the second housing 100b is 360°. An object corresponding to a mobile device shaped as a triangle, such as a desktop calendar, may indicate that the angle between the first housing 100a and the second housing 100b is 60°. An object corresponding to a mobile device in a random state may indicate that the angle between the first housing 100a and the second housing 100b is one of 0° to 360°.

The controller 110 may calculate an angle between the first housing 100a and the second housing 100b using an acceleration sensor. An angle value may be input via a sensor (e.g., an angle sensor, an acceleration sensor, etc.) or by a user.

Referring again to FIG. 3, in step S330, if the angle between the first housing and the second housing is greater than a threshold, the mobile device operated according to a first touch mode.

Referring again to FIG. 4B, the controller 110 calculates an angle α between the first housing 100a and the second housing 100b which are rotated, using the angle sensor 174. If the angle α is greater than a threshold (which may be set to a value according to the settings), the controller 110 triggers the second touch screen 190b of the second housing 100b to operate in a first touch mode.

For example, a threshold for the angle α may be 310°, 275° to 330°, or 300° to 355°. The threshold may also be set to any other value.

When the angle α is greater than the threshold, the rear side of the first housing 100a and the rear side of the second housing 100b are closer to each other, such that the controller 110 may turn off a screen displayed on the second touch screen 190b of the second housing 100b, in the first touch mode.

Turning off a touch screen reduces or stops power supplied to a display panel of the touch screen that is turned off, such that the screen background of the touch screen is displayed in black color (or achromatic color).

If the screen of the second touch screen 190b is turned off, the controller 110 may restrict or cut off power supplied to a display panel of the second touch screen 190b, e.g., by controlling the power supply 180 to restrict or cut off power supplied to a display panel of the second touch screen 190b.

Herein, turning off a touch screen means that power is still supplied to a touch panel of the touch screen, which can receive a user input (e.g., a touch, a touch gesture, etc.).

If a screen of the second touch screen 190b is turned off, the controller 110 still supplies power to a touch panel of the second touch screen 190b, e.g., by controlling the power supply 180 to supply power to a touch panel of the second touch screen 190b. If a screen of the second touch screen 190b is turned off, the controller 110 may control the power supply 180 to supply power to a specific area of a touch panel of the second touch screen 190b.

The controller 110 may switch a second touch screen 190b of the second housing 100b to a first touch mode, according to a trigger. The controller 110 is capable of turning off a screen displayed on the second touch screen 190b, according to the operation of switching the second touch screen 190b to the first touch mode.

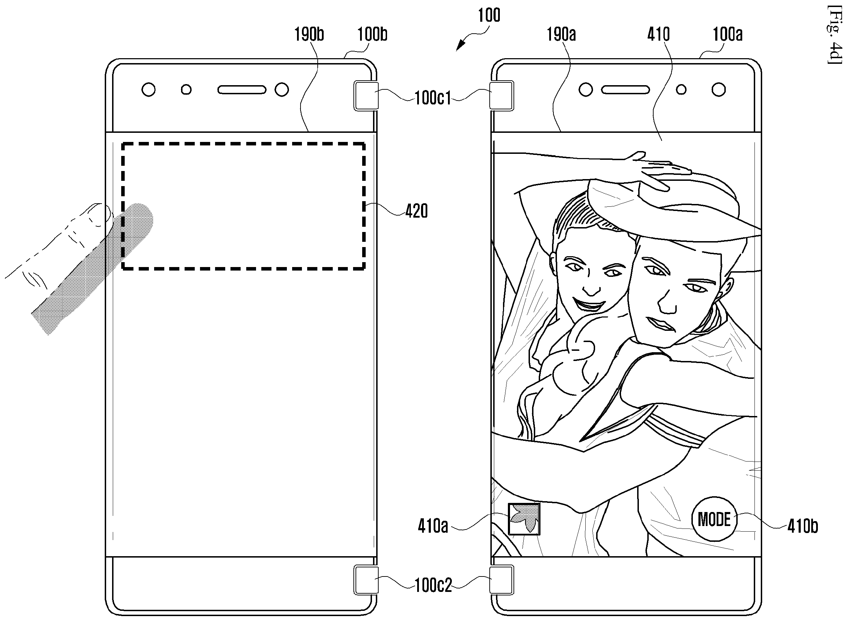

Referring to FIG. 4D, in the first touch mode, an area 420 of the second touch screen 190b may be switched to a touch reception area. Consequently, in the first touch mode, a touch may still be detected the second touch screen 190b, but only in the touch reception area 420.

Referring again to FIG. 3, in step S340, the mobile device detects a touch applied to a shortcut icon displayed on the first touch screen.

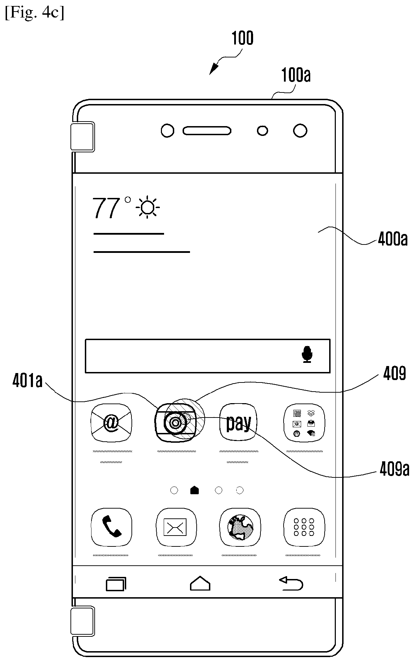

Referring to FIG. 4C, a first user input 409 (e.g., a touch, hovering gesture, etc.) is applied to a shortcut icon 401a displayed on the home screen 400a of the first touch screen 190a when the mobile device 100 is in an open state.

Specifically, the controller 110 detects the first user input 409, using the first touch screen 190a and the touch screen controller 195. The controller 110 calculates a first user input location 409a (e.g., X1- and Y1- coordinates) corresponding to the first user input 409, using an electrical signal received from the touch screen controller 195.

The controller 110 stores the touch location 409a, a touch detection time (e.g., 10:05 AM), and the information regarding the detected touch in the storage unit 175. The first touch 409 may be applied to the first touch screen 190a by a user's finger, a stylus pen 167, etc.

The controller 110 executes an application (e.g., a camera application, etc.) corresponding to the first user input 409.

Referring again to FIG. 3, in step S350, the mobile device displays an application corresponding to the touched shortcut icon on the first touch screen.

Referring again to FIG. 4D, the controller 110 executes an application (e.g., a camera application) corresponding to the touch 409 of the touched shortcut icon 401a and displays the executed camera application screen 410 on the first touch screen 190a.

The camera application screen 410 may display a preview of a subject through a first camera 151 capable of supporting a selfie function. The camera application screen 410 may include a photographing mode 410 and a preview 410a of a pre-shot image, overlapping a subject to be photographed. The camera application screen 410 may further include a photographing button for receiving a user input corresponding to an instruction for photographing a subject.

The controller 110 may execute the second touch screen 190b in the first touch mode when the mobile device 100 is in an open state. In the first touch mode, the second touch screen 190b powers the touch panel, but disables the display panel.

In the first touch mode, the second touch screen 190b powers part of the touch panel, e.g., the area 420, but disables the display panel. Alternatively, in the first touch mode, the second touch screen 190b powers part of the touch panel, and part of the display panel corresponding to the part of the touch panel (e.g., a line, a diagram, an image, etc. to distinguish an invisible area from the remaining area).

The controller 110 may control the power supply 180 to supply power to the touch panel of the second touch screen 190b or to supply power to a specific area of the touch panel of the second touch screen 190b, e.g., the area 420.

The controller 110 may set a touch reception area 420 to receive a user input applied to the second touch screen 190b. The touch reception area 420 may be an invisible area that is capable of detecting a user input (e.g., a touch, etc.). Alternatively, the second touch screen 190b may display a boundary with a line (e.g., straight line, dot line, etc.), a diagram (e.g., a circle, a polygon, etc.), an image, etc., in order to distinguish the touch reception area 420 from the remaining area.'

The touch reception area 420 has an area and a location in the second touch screen 190b, corresponding to an attribute of an application displayed on the first touch screen 190a. In an unclaimed embodiment, the touch reception area 420 may have a form (e.g., a circle, an ellipse, a polygon, etc.) in the second touch screen 190b, corresponding to an attribute of an application displayed on the first touch screen 190a.

If the mobile device 100 is an Android^{®} OS based device, the controller 110 may detect an attribute of an executed application, using information included in "androidmanifest.xml" stored in the storage unit 175. For example, attributes of an application may include an application name, libraries used in an application, an OS version, application permission, resolutions supported by an application, application components (e.g., activity, services), etc.

Files storing attributes of an application may vary according to types of a mobile device OS.

The touch reception area 420 corresponding to an executed camera application may be located at the top of the second touch screen 190b (e.g., higher than the center of the second touch screen 190b), considering the finger length of a user's hand (e.g., the right hand) holding the mobile device 100. If the finger length of a user's hand (e.g., the right hand) holding the mobile device 100 is relatively short, the touch reception area 420 may be located at the top and the middle of the second touch screen 190b (e.g., including the central area of the second touch screen 190b, except for the bottom of the second touch screen 190b corresponding to the user's palm).

For example, the area of the touch reception area 420 may be less than or equal to 30% of the area of the second touch screen 190b. Alternatively, the area of the touch reception area 420 may be less than or equal to 55% of the area of the second touch screen 190b.

The touch reception area 420 corresponding to an attribute of an executed application (e.g., camera application, etc.) may be located at the top of the second touch screen 190b (e.g., higher than the center of the second touch screen 190b). The number of touch reception areas corresponding to an attribute of an executed camera application may be set to one touch reception area on the second touch screen 190b. Alternatively, the area size of the touch reception area 420 corresponding to an attribute of an executed camera application may be set via the second touch screen 190b.

Referring again to FIG. 3, in step S360, the mobile device detects a touch (or touch gesture) in a touch reception area on the second touch screen.

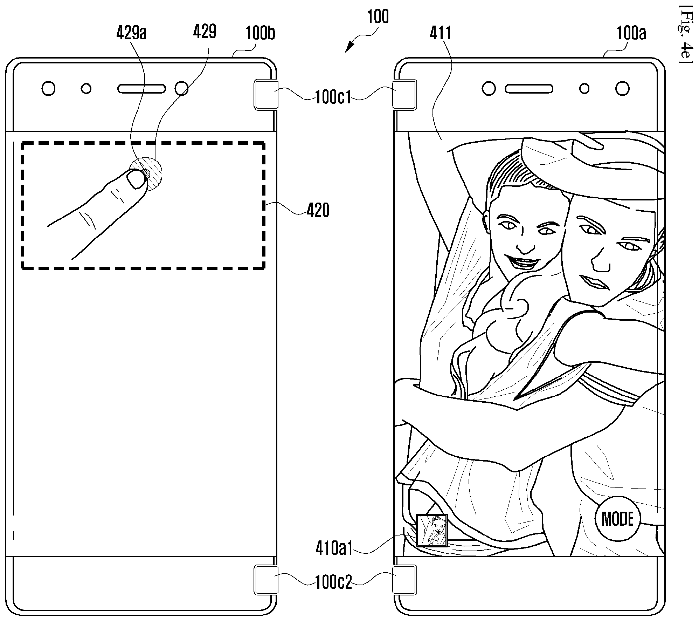

Referring to FIG. 4E, the mobile device 100, in an open state, receives a second user input 429 (e.g., a touch, a touch gesture, etc.) in touch reception area 420 on the second touch screen 190b.

The controller 110 detects a second user input 429, using the second touch screen 190b and the touch screen controller 195. The controller 110 calculates a second user input location 429a (e.g., X2- and Y2- coordinates) corresponding to the second user input 429, using an electrical signal received from the touch screen controller 195.

The controller 110 stores the touch location 429a, a touch detection time (e.g., 10:06 AM) and the information regarding the detected touch in the storage unit 175. The second touch 429 may be applied to the second touch screen 190b by a user's finger, a stylus pen 167, etc.

The second user input 429 detected in the touch reception area 420 on the second touch screen 190b may be a pre-set (stored) touch (e.g., tap, etc.) or a pre-set (stored) touch gesture (e.g., a drag gesture, etc.).

The controller 110 may control the camera application in response to the second user input 429.

Alternatively, the second controller 110b may detect the second user input 429, using the second touch screen 190b and the second touch screen controller 195b. The second controller 110b calculates a second user input location 429a (e.g., X2- and Y2- coordinates) corresponding to the second user input 429, using an electrical signal received from the second touch screen controller 195b.

The second controller 110b stores the touch location 429a, a touch detection time (e.g., 10:06 AM) and the information regarding the detected touch in the storage unit 175. The second touch 429 may be applied to the second touch screen 190b by a user's finger, a stylus pen 167, etc.

The first controller 110a may control the camera application in response to the second user input 429.

Referring again to FIG. 3, in step S370, the mobile device controls operations of the application according to the touch (or touch gesture) detected in the touch reception area.

Referring again to FIG. 4E, the controller 110 may control the operations of the camera application in response to the second user input 429. For example, the controller 110 captures a subject via a first camera 151, in response to the second user input 429. The controller 110 may display an image corresponding to the captured subject via a preview icon 410a located at the bottom of the application screen 410.

The controller 110 may display an image of a subject 411 in a different pose on the camera application screen.

Alternatively, if the second user input 429 is a touch gesture (e.g., a rotation gesture), the controller 110 may shoot a video of a subject via the first camera 151.

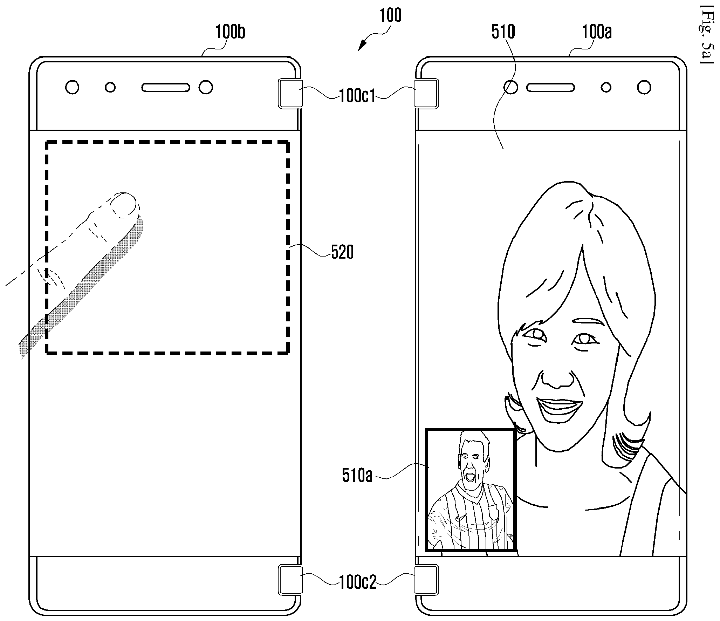

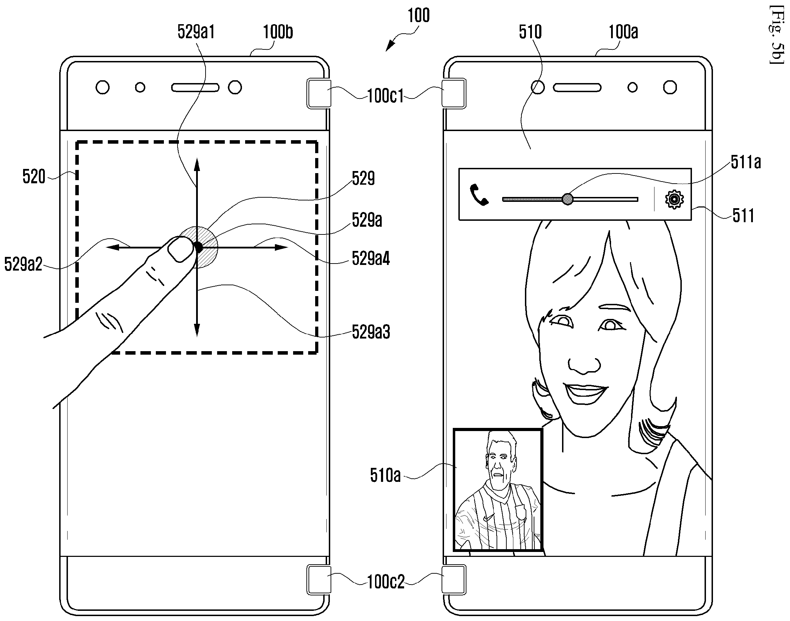

FIGs. 5A and 5B illustrate a method of controlling a mobile device according to an embodiment and examples not including all the claimed features of the present disclosure.

Referring to FIG. 5A, the controller 110 executes an application (e.g., a video call application) corresponding to a touch 409 of a touched shortcut icon. The controller 110 displays the executed video call application screen 510 on the first touch screen 190a.

The video call application screen 510 displays the other party as a video calling correspondent and a video calling user captured by a first camera 151. The mobile device 100 displays a video calling user on a small window 510a at the bottom of the video call application screen 510.

Because the first touch mode of FIG. 5A is the same as the example illustrated in FIG. 4D, a detailed description is omitted below.

The touch reception area 520 corresponding to an executed video call application may be located at the top and the middle of the second touch screen 190b (e.g., including the central area of the second touch screen 190b, except for the bottom of the second touch screen 190b corresponding to the user's palm), considering the finger length of a user's hand (e.g., the right hand) holding the mobile device 100.

For example, the area of the touch reception area 520 may be less than or equal to 50% of the area of the second touch screen 190b, or less than or equal to 65% of the area of the second touch screen 190b.

Referring to FIG. 5B, the mobile device 100, in an open state, receives a second user input 529 (e.g., a touch, a touch gesture, etc.) in touch reception area 520 on the second touch screen 190b.

The controller 110 detects a second user input 529, using the second touch screen 190b and the touch screen controller 195. The controller 110 calculates a second user input location 529a (e.g., X21- and Y21- coordinates) corresponding to the second user input 529, using an electrical signal received from the touch screen controller 195.

The controller 110 stores the touch location 529a, a touch detection time (e.g., 10:06 AM) and the information regarding the detected touch in the storage unit 175. The second touch 529 may be applied to the second touch screen 190b by a user's finger, a stylus pen 167, etc.

The controller 110 controls the volume of the video call application in response to the second user input 529.

Alternatively, the second controller 110b detects the second user input 529, using the second touch screen 190b and the second touch screen controller 195b. The second controller 110b calculates a second user input location 529a (e.g., X22- and Y22- coordinates) corresponding to the second user input 529, using an electrical signal received from the second touch screen controller 195b.

The second controller 110b stores the touch location 529a, a touch detection time (e.g., 10:06 AM) and the information regarding the detected touch in the storage unit 175. The second touch 529 may be applied to the second touch screen 190b by a user's finger, a stylus pen 167, etc.

The first controller 110a controls the volume of the video call application in response to the second user input 529.

The controller 110 may control the operations of the video call application in response to the second user input 529. For example, the controller 110 may display a volume control pop-up 511 on the video call application screen 510 in response to the second user input 529.

If a continuous movement (e.g., from 529a1 to 529a4) of a second user input 529 is applied to the second touch screen 190b, the controller 110 moves the indicator 511a of the volume control pop-up 511 in the right or left direction on the video call application screen 510. For example, if a continuous movement (e.g., 529a1, 529a4) of a second user input 529 is applied to the second touch screen 190b, the controller 110 moves the indicator 51 1a of the volume control pop-up 511 in the right direction on the video call application screen 510. If a continuous movement (e.g., 529a2, 529a3) of a second user input 529 is applied to the second touch screen 190b, the controller 110 moves the indicator 51 1a of the volume control pop-up 511 in the left direction on the video call application screen 510.

Alternatively, if the second user input 529 is a touch gesture (e.g., a rotation gesture), the controller 110 changes the screen locations of a video call correspondent and a video call user with each other (e.g., screen switching, i.e., displaying the video call correspondent on a small window 510a).

As another alternative, if the second user input 529 is a touch (e.g., a long press), the controller 110 displays a screen brightness control pop-up (not shown) for controlling the brightness of the video call application screen 520. If a continuous movement (e.g., from 529a1 to 529a4) of a second user input 529 is applied to the second touch screen 190b, the controller 110 moves the indicator of the screen brightness control pop-up (not shown) in the right or left direction on the video call application screen 510.

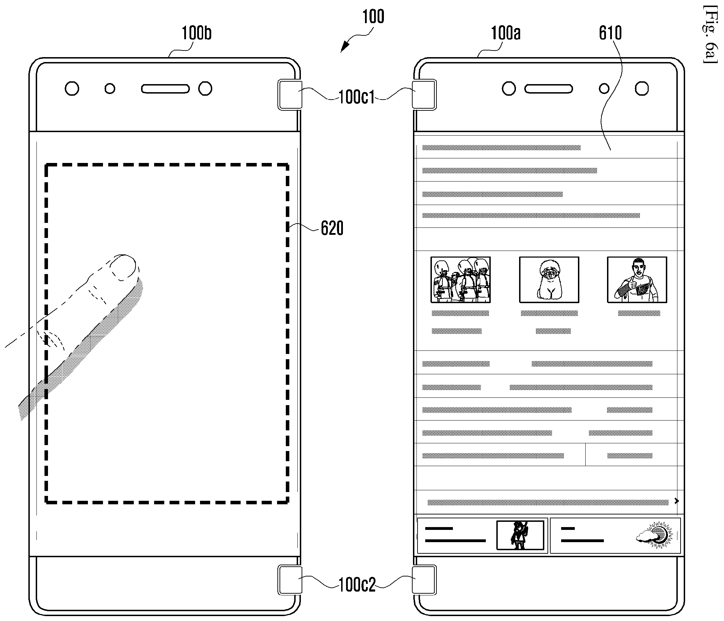

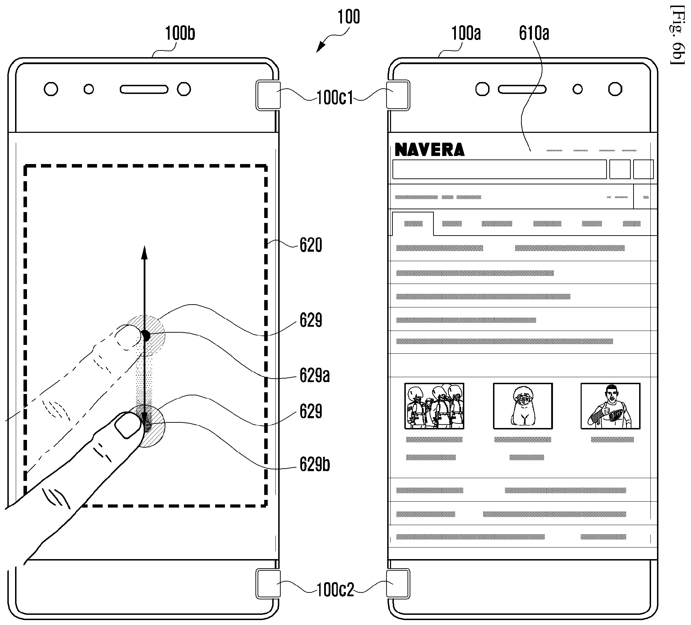

FIGs. 6A and 6B illustrate a method of controlling a mobile device according to an example not including all the claimed features of the present disclosure.

Referring to FIG. 6A, the controller 110 may execute an application (e.g., a web browser, an SNS application, etc.) corresponding to a touch 409 of a touched shortcut icon. The controller 110 displays the executed web browser screen 610 including web pages on the first touch screen 190a.

Since the first touch mode of FIG. 6A is the same as the example not including all the claimed features of FIG. 4D, a detailed description is omitted below. The touch reception area 620 corresponding to an executed web browser may be located at the middle of the second touch screen 190b (e.g., including the central area of the second touch screen 190b), considering the finger length of a user's hand (e.g., the right hand) holding the mobile device 100.

For example, the area of the touch reception area 620 may be less than or equal to 70% of the area of the second touch screen 190b, or less than or equal to 85% of the area of the second touch screen 190b.

Referring to FIG. 6B, the mobile device 100, in an open state, receives a second user input 629 (e.g., a touch, a touch gesture, etc.) in touch reception area 620 on the second touch screen 190b.

The controller 110 detects a second user input 629, using the second touch screen 190b and the touch screen controller 195. The controller 110 calculates a second user input location 629a (e.g., X23- and Y23- coordinates) corresponding to the second user input 629, using an electrical signal received from the touch screen controller 195.

The controller 110 stores the touch location 629a, a touch detection time (e.g., 10:06 AM) and the information regarding the detected touch in the storage unit 175. The second touch 629 may be applied to the second touch screen 190b by a user's finger, a stylus pen 167, etc.

The controller 110 controls the movement (e.g., scrolling) of web pages in response to the second user input 629.

Since the process where the second controller 110b detects the second user input 629, using the second touch screen 190b and the second touch screen controller 195b, as illustrated in FIG. 6B, is similar to the process in which the second controller 110b detects the second user input 529, using the second touch screen 190b and the second touch screen controller 195b, as illustrated in FIG. 5B, a detailed description is omitted below.

The controller 110 may control the movement of web pages in response to the second user input 629. For example, the controller 110 may prepare for the movement of web pages in response to the second user input 629.

If continuous movements (e.g., 629a to 629b) of a second user input 629 are applied to the second touch screen 190b, the controller 110 moves (scrolling) a web page down.

Alternatively, if the second user input 629 is a touch gesture (e.g., a rotation gesture), the controller 110 returns from the current web page to the previous web page.

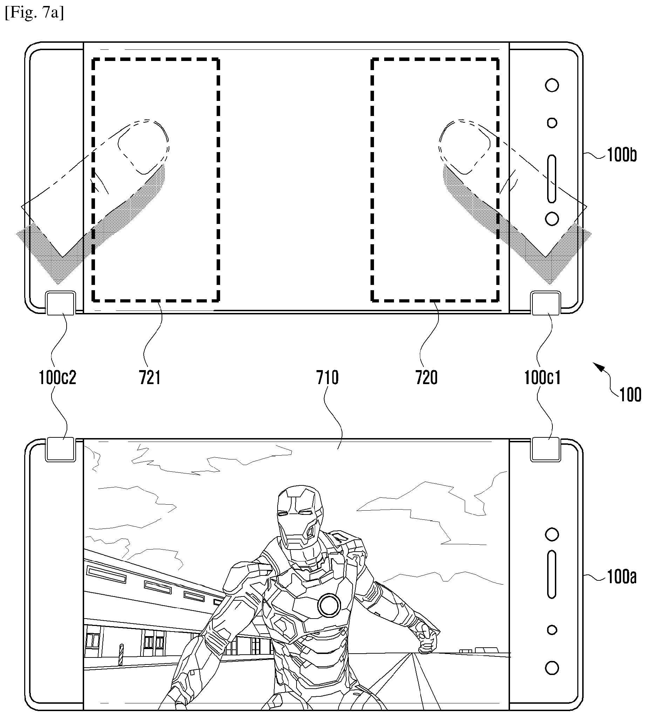

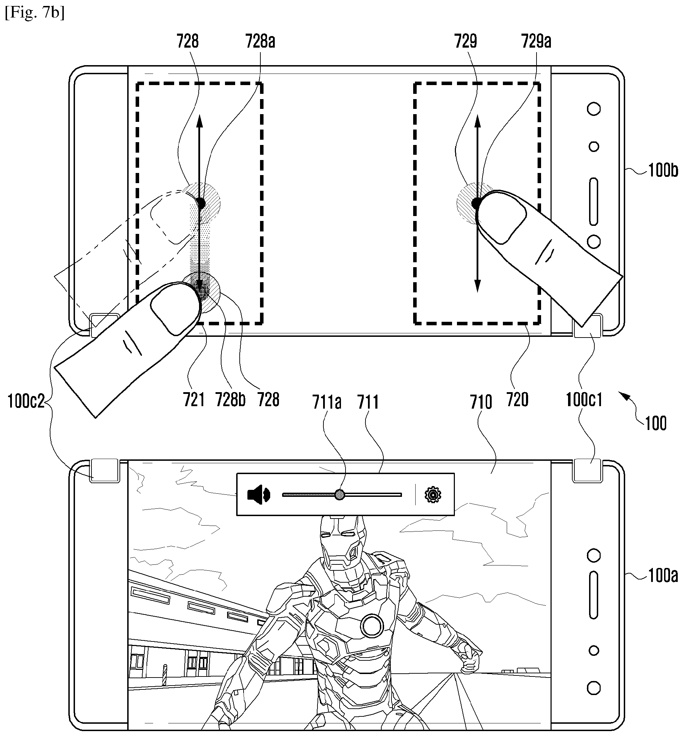

FIGs. 7A and 7B are illustrate a method of controlling a mobile device according to an example not including all the claimed features of the present disclosure

Referring to FIG. 7A, the controller 110 may execute an application (e.g., a video player, etc.) corresponding to a touch of a touched shortcut icon. The controller 110 may display the executed video player screen 710 on the first touch screen 190a.

The controller 110 displays video content (e.g., a video file) on the video player screen 710.

Because the first touch mode of FIG. 7A is the same as the example of FIG. 4D, a detailed description is omitted below.

The touch reception areas 720 and 721 corresponding to the executed video player may be located at the left or right region in the second touch screen 190b, considering the position (orientation) of the mobile device (e.g., a landscape). Alternatively, the touch reception areas 720 and 721 corresponding to the executed video player may be located at both regions (the left and right regions) in the second touch screen 190b, respectively, considering the position (orientation) of the mobile device (e.g., a landscape). Alternatively, the touch reception area 720 or 721 corresponding to the executed video player may be located in the second touch screen 190b, considering the position (orientation) of the mobile device (e.g., a landscape).

For example, the area of each of the touch reception areas 720 and 721 may be less than or equal to 30% of the area of the second touch screen 190b, or less than or equal to 40% of the area of the second touch screen 190b.

The touch reception areas 720 and 721 may differ in area from each other. In addition, the shape (e.g., a polygon, etc.) of the touch reception area 721 located at the left region may differ from that (e.g., an ellipse, etc.) of the touch reception area 720 located at the right region on the screen.

Referring to Fig. 7B, the mobile device 100, in an open state, receives a second user input 728 (e.g., a touch, a touch gesture, etc.) in the touch reception area 721 located at the left region in the second touch screen 190b.

The controller 110 detects a second user input 728, using the second touch screen 190b and the touch screen controller 195. The controller 110 calculates a second user input location 728a (e.g., X24- and Y24- coordinates) corresponding to the second user input 728, using an electrical signal received from the touch screen controller 195.

The controller 110 stores the touch location 728a, a touch detection time (e.g., 10:06 AM) and the information regarding the detected touch in the storage unit 175. The second touch 728 may be applied to the second touch screen 190b by a user's finger, a stylus pen 167, etc.

The controller 110 controls the volume of the video player application in response to the second user input 728.

The mobile device 100, in an open state, receives a third user input 729 (e.g., a touch, a touch gesture, etc.) in touch reception area 620 located at the right region in the second touch screen 190b.

The controller 110 detects the third user input 729, using the second touch screen 190b and the touch screen controller 195. The controller 110 calculates a third user input location 729a (e.g., X25- and Y25- coordinates) corresponding to the third user input 729, using an electrical signal received from the touch screen controller 195.

The controller 110 stores the touch location 728a, a touch detection time (e.g., 10:06 AM) and the information regarding the detected touch in the storage unit 175. The third touch 729 may be applied to the second touch screen 190b by a user's finger, a stylus pen 167, etc.

The controller 110 controls the brightness of the video player application in response to the third user input 729.

Because the process where the second controller 110b detects the second user input 728 and the third user input 729, using the second touch screen 190b and the second touch screen controller 195b, as illustrated in FIG. 7B, is similar to the process where the second controller 110b detects the second user input 529, using the second touch screen 190b and the second touch screen controller 195b, as illustrated in FIG. 5B, a detailed description is omitted below.

The controller 110 may control the volume of the video player application in response to the second user input 728. The controller 110 is displays a volume control pop-up 711 on the video player application screen 710 in response to the second user input 728.

If a continuous movement (e.g., from 728a to 728b) of a second user input 728 is applied to the second touch screen 190b, the controller 110 moves the indicator 711a of the volume control pop-up 711 in the left direction on the video player application screen 710.

The controller 110 may control the screen brightness of the video player application in response to the third user input 729. The controller 110 may display a screen brightness control pop-up on the video player screen 710 in response to the third user input 729.

If a continuous movement (e.g., from 728a to 728b) of a second user input 728 is applied to the second touch screen 190b, the controller 110 moves the indicator of the screen brightness control pop-up in the left direction (or downward).

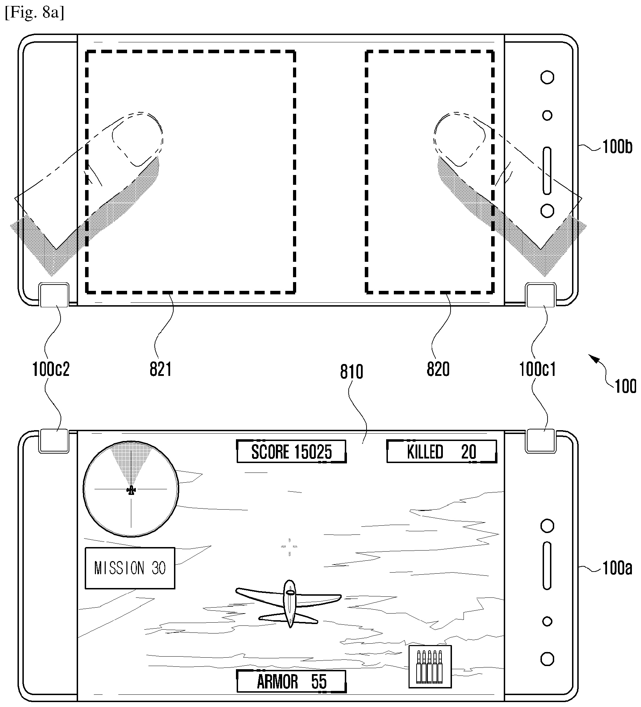

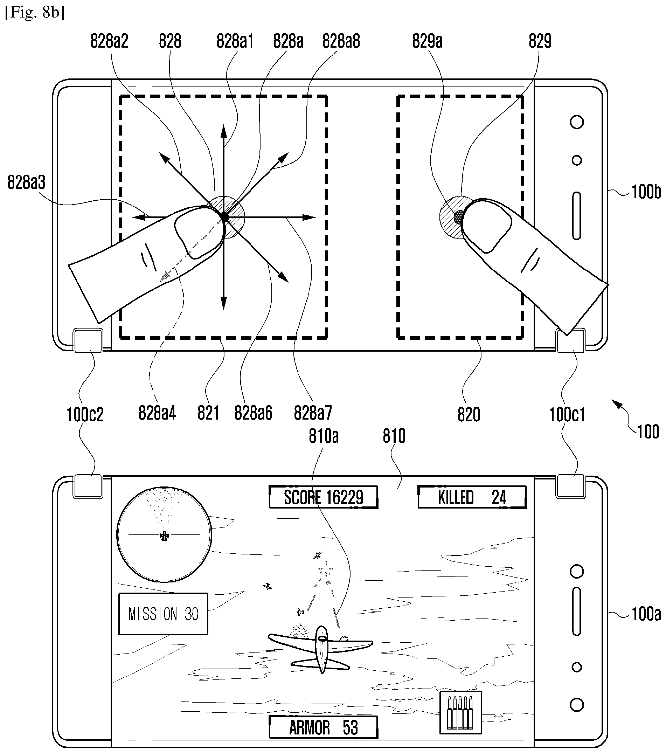

FIGs. 8A and 8B illustrate a method of controlling a mobile device according to an embodiment of the present disclosure

Referring to FIG. 8A, the controller 110 executes an application (e.g., a game application, etc.) corresponding to a touch of a touched shortcut icon. The controller 110 displays the executed game application screen 810 including game content (e.g., an airplane shooting game) on the first touch screen 190a.

Because the first touch mode of FIG. 8A is the same as the example of FIG. 4D, a detailed description is omitted below.

The touch reception areas 820 and 821 corresponding to the executed game application are located at the left and/or right region in the second touch screen 190b, considering the position (orientation) of the mobile device (e.g., a landscape). Alternatively, the touch reception area 820 or 821 corresponding to the executed game application may be located in the second touch screen 190b, considering the position (orientation) of the mobile device (e.g., a landscape).

For example, the total area of the touch reception areas 820 and 821 may be less than or equal to 80% of the area of the second touch screen 190b, or the area of the touch reception area 821 may be less than or equal to 50% of the area of the second touch screen 190b.

The touch reception areas 820 and 821 may differ in size from each other. For example, the touch reception area 821 for the direction control and/or movement of an airplane (a range of controllable angle of 360°) is greater in area size than one touch reception area 820 for the shooting motion.

The area of the touch reception area for receiving a touch gesture may vary according to the input directions of the touch gesture. For example, the area of the touch reception area 821, which receives a touch gesture in the up and down directions, may be smaller than that of the touch reception area 821, which receives a touch gesture in the up/down/side-to-side directions.

In addition, the areas of the touch reception areas may differ according to the type of application.

In addition, the shape (e.g., a polygon, etc.) of the touch reception area 821 located in the left region may differ from that (e.g., an ellipse, etc.) of the touch reception area 820 located in the right region.

Referring to FIG. 8B, the mobile device 100, in an open state, receives a second user input 828 (e.g., a touch, a touch gesture, etc.) in the touch reception area 821 located at the left region in the second touch screen 190b.

The controller 110 detects a second user input 828, using the second touch screen 190b and the touch screen controller 195. The controller 110 calculates a second user input location 828a (e.g., X25- and Y25- coordinates) corresponding to the second user input 828, using an electrical signal received from the touch screen controller 195.

The controller 110 stores the touch location 828a, a touch detection time (e.g., 10:06 AM) and the information regarding the detected touch in the storage unit 175. The second touch 828 may be applied to the second touch screen 190b by a user's finger, a stylus pen 167, etc.

The controller 110 controls the shooting motion of the game application (e.g., firing, etc.) in response to the second user input 828.

The mobile device 100, in an open state, receives a third user input 829 (e.g., a touch, a touch gesture, etc.) in touch reception area 820 located at the right region in the second touch screen 190b.

The controller 110 detects the third user input 829, using the second touch screen 190b and the touch screen controller 195. The controller 110 calculates a third user input location 829a (e.g., X26- and Y26- coordinates) corresponding to the third user input 829, using an electrical signal received from the touch screen controller 195.

The controller 110 stores the touch location 828a, a touch detection time (e.g., 10:06 AM) and the information regarding the detected touch in the storage unit 175. The third touch 829 may be applied to the second touch screen 190b by a user's finger, a stylus pen 167, etc.

The controller 110 controls the shooting motion to an airplane in response to the third user input 829.

Because the process in which the second controller 110b detects the second user input 828 and the third user input 829, using the second touch screen 190b and the second touch screen controller 195b, as illustrated in FIG. 8B, is similar to the process in which the second controller 110b detects the second user input 728 and the third user input 729, using the second touch screen 190b and the second touch screen controller 195b, as illustrated in FIG. 7B, a detailed description is omitted below.

The controller 110 may control the direction and/or movement of an airplane in response to the second user input 828.

If a continuous movement (e.g., from 828a to 828b) of a second user input 828 is applied to the second touch screen 190b, the controller 110 controls the direction and/or movement of an airplane in response to the second user input 828. The controller 110 is also capable of controlling the shooting motion to an airplane in response to the third user input 829.

In accordance with the above-described embodiments and examples not including all the claimed features of the present disclosure, a mobile device may be configured in such a way as to include a number of touch screens, connected to each other with a hinge or a flexible PCB, and is capable of detecting, when the touch screens are opened with respect to each other, a touch applied to a rear touch screen whose image-display area is turned off.

A mobile device is also configured in such a way as to include a number of touch screens, connected to each other with a hinge or a flexible PCB, and is capable of detecting, when the touch screens are opened with respect to each other, a touch applied to a rear touch screen whose image-display area is turned off, reducing power consumption.

A mobile device is also configured in such a way as to include a number of touch screens, connected to each other with a hinge or a flexible PCB, and is capable of detecting, when the touch screens are opened with respect to each other, a touch applied to a visible touch detectable area of a rear touch screen whose image-display area is turned off, reducing power consumption.

A mobile device is also configured in such a way as to include a number of touch screens, connected to each other with a hinge or a flexible PCB, and is capable of detecting, when the touch screens are opened with respect to each other, a touch applied to a touch detectable area (or part) of a rear touch screen whose image-display area is turned off, reducing power consumption. A mobile device is also configured in such a way as to include a number of touch screens, connected to each other with a hinge or a flexible PCB, and is capable of detecting, when the touch screens are opened with respect to each other, a preset touch applied to a touch detectable area (or part) of a rear touch screen whose image-display area is turned off, reducing power consumption..

The present disclosure is not limited to the embodiments and examples not including all the claimed features described above. Mobile devices may also be configured in such a way as to include a number of touch screens, connected to each other with a hinge or a flexible PCB, and is capable of detecting, when the touch screens are opened with respect to each other, a preset touch applied to a rear touch screen whose image-display area is turned off, reducing power consumption.

The methods according to above-described embodiments and examples not including all the claimed features of the present disclosure may also be performed through various computer means.

The various embodiments and examples not including all the claimed features of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments and examples not including all the claimed features of the present disclosure as described above.

Alternatively, one or more processors operating in accordance with stored instructions may implement the functions associated with the various embodiments and examples not including all the claimed features of the present disclosure as described above. If such is the case, it is within the scope of the present disclosure that such instructions may be stored on one or more non-transitory processor readable mediums.

Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

While the present disclosure has been shown and described with reference to various embodiments and examples not including all the claimed features thereof, it will be understood by those skilled in the art that various changes in form and details may be made therein without departing from scope of the present disclosure as defined by the appended claims.

## Claims

1. A method of controlling a mobile device (100) including multiple touch screens, the method comprising:
calculating (S320) an angle between a first housing (100a) including a first touch screen (190a) and a second housing (100b) including a second touch screen (190b), the second housing (100b) being rotatably connected to the first housing (100a); and
if the calculated angle is greater than a threshold, turning off (S330) an image-display area of the second touch screen (190b), executing (S350) an application in response to a first touch applied (S340) to an icon displayed on the first touch screen (190a), detecting (S360) a second touch in a touch detectable area of the turned-off image-display area of the second touch screen (190b), and controlling (S370) the application in response to the detected second touch,
**characterized in that**
a size and a location of the touch detectable area on the second touch screen (190b) is determined according to an attribute of the application, wherein the size of the touch detectable area is smaller than a size of the second touch screen (190b).

2. The method of claim 1, wherein a location of the touch detectable area on the second touch screen (190b) is determined according to an orientation of the mobile device (100).

3. The method of claim 1, further comprising providing at least one of visual feedback, auditory feedback, and tactile feedback, in response to the detection of the second touch on the touch detectable area.

4. A mobile device (100) including multiple touch screens, the mobile device (100) comprising:
a first housing (100a) including a first touch screen (190a);
a second housing (100b), rotatably connected to the first housing (100a), including a second touch screen (190b);
a sensor (174) for detecting an angle between the first housing (100a) and the second housing (100b); and
a controller (110) configured to:
calculate (S320) the angle between the first (100a) and second (100b) housings rotating with respect to each other, using the sensor (174), and
if the calculated angle is greater than a threshold, turn off (S330) an image-display area of the second touch screen, execute (S350) an application in response to a first touch applied (S340) to an icon displayed on the first touch screen (190a), detect (S360) a second touch in a touch detectable area of the turned-off image-display area of the second touch screen (190b), and control (S370) the application in response to the detected second touch,
**characterized in that**
a size and a location of the touch detectable area on the second touch screen is determined according to an attribute of the application, wherein the size of the touch detectable area is smaller than a size of the second touch screen (190b).

5. The mobile device (100) of claim 4, wherein the first (100a) and second (100b) housings are connected to each other via at least one of a hinge (100c1, 100c2) and flexible printed circuit board, PCB.

6. The mobile device (100) of claim 5, wherein the sensor (174) is located at at least one of the first housing (100a), the second housing (100b), and the hinge (100c1, 100c2).

7. The mobile device (100) of claim 4, wherein the controller (110) is further configured to control a power supply to restrict power supplied to a display panel of the second touch screen (190b), if the calculated angle is greater than a threshold.

8. The mobile device (100) of claim 4, wherein the controller (110) is further configured to control a power supply to supply power to a touch panel of the second touch screen (190b) which has turned off the image-display area.

9. The mobile device (100) of claim 4, wherein the controller (110) is further configured to control a power supply to supply power to part of a touch panel of the second touch screen (190b) which has turned off the image-display area, corresponding to the touch detectable area.

10. The mobile device (100) of claim 4, wherein the controller (110) is further configured to provide at least one of visual feedback via the first touch screen (190a), auditory feedback via a speaker (163a), and tactile feedback via a vibration motor (164), in response to the detection of the second touch on the touch detectable area of the second touch screen (190b).

## Patentansprüche

1. Verfahren zum Steuern einer mobilen Vorrichtung (100), die mehrere Touchscreens enthält, wobei das Verfahren Folgendes umfasst:
Berechnen (S320) eines Winkels zwischen einem ersten Gehäuse (100a) einschließlich eines ersten Touchscreens (190a) und einem zweiten Gehäuse (100b) einschließlich eines zweiten Touchscreens (190b), wobei das zweite Gehäuse (100b) drehbar mit dem ersten Gehäuse (100a) verbunden ist; und
wenn der berechnete Winkel größer als eine Schwelle ist, Ausschalten (S330) eines Bildanzeigebereichs des zweiten Touchscreens (190b), Ausführen (S350) einer Anwendung als Reaktion auf eine erste Berührung, die auf ein Icon angewendet wird (S340), das auf dem ersten Touchscreen (190a) angezeigt wird, Erkennen (S360) einer zweiten Berührung in einem berührungserkennbaren Bereich des ausgeschalteten Bildanzeigebereichs des zweiten Touchscreens (190b) und Steuern (S370) der Anwendung als Reaktion auf die erkannte zweite Berührung,
**gekennzeichnet dadurch, dass**
eine Größe und ein Standort des berührungserkennbaren Bereichs auf dem zweiten Touchscreen (190b) gemäß einem Attribut der Anwendung bestimmt werden, wobei die Größe des berührungserkennbaren Bereichs kleiner als eine Größe des zweiten Touchscreens (190b) ist.

2. Verfahren nach Anspruch 1, wobei ein Standort des berührungserkennbaren Bereichs auf dem zweiten Touchscreen (190b) gemäß einer Ausrichtung der mobilen Vorrichtung (100) bestimmt wird.

3. Verfahren nach Anspruch 1, welches ferner das Bereitstellen einer visuellen Rückmeldung, einer auditiven Rückmeldung und/oder einer taktilen Rückmeldung als Reaktion auf die Erkennung der zweiten Berührung auf dem berührungserkennbaren Bereich umfasst.

4. Mobile Vorrichtung (100), die mehrere Touchscreens enthält, wobei die mobile Vorrichtung (100) Folgendes umfasst:
ein erstes Gehäuse (100a) einschließlich eines ersten Touchscreens (190a);
ein zweites Gehäuse (100b), das drehbar mit dem ersten Gehäuse (100a) verbunden ist, einschließlich eines zweiten Touchscreens (190b);
einen Sensor (174) zum Erkennen eines Winkels zwischen dem ersten Gehäuse (100a) und dem zweiten Gehäuse (100b); und
eine Steuerung (110), die konfiguriert ist zum:
Berechnen (S320) des Winkels zwischen dem ersten (100a) und dem zweiten (100b) Gehäuse, die gegeneinander rotieren, unter Verwenden des Sensors (174), und
wenn der berechnete Winkel größer als eine Schwelle ist, Ausschalten (S330) eines Bildanzeigebereichs des zweiten Touchscreens, Ausführen (S350) einer Anwendung als Reaktion auf eine erste Berührung, die auf ein Icon angewendet wird (S340), das auf dem ersten Touchscreen (190a) angezeigt wird, Erkennen (S360) einer zweiten Berührung in einem berührungserkennbaren Bereich des ausgeschalteten Bildanzeigebereichs des zweiten Touchscreens (190b) und Steuern (S370) der Anwendung als Reaktion auf die erkannte zweite Berührung,
**gekennzeichnet dadurch, dass**
eine Größe und ein Standort des berührungserkennbaren Bereichs auf dem zweiten Touchscreen gemäß einem Attribut der Anwendung bestimmt werden, wobei die Größe des berührungserkennbaren Bereichs kleiner als eine Größe des zweiten Touchscreens (190b) ist.

5. Mobile Vorrichtung (100) nach Anspruch 4,
wobei das erste (100a) und das zweite (100b) Gehäuse miteinander über ein Scharnier (100c1, 100c2) und/oder eine flexible Leiterplatte, PCB, verbunden sind.

6. Mobile Vorrichtung (100) nach Anspruch 5, wobei der Sensor (174) an dem ersten Gehäuse (100a), dem zweiten Gehäuse (100b) und/oder dem Scharnier (100c1, 100c2) angeordnet ist.

7. Mobile Vorrichtung (100) nach Anspruch 4, wobei die Steuerung (110) ferner konfiguriert ist, um eine Stromversorgung zu steuern, um die Stromversorgung an ein Anzeigefeld des zweiten Touchscreens (190b) zu beschränken, wenn der berechnete Winkel größer als eine Schwelle ist.

8. Mobile Vorrichtung (100) nach Anspruch 4, wobei die Steuerung (110) ferner konfiguriert ist, um eine Stromversorgung zu steuern, um Strom an ein Berührungsfeld des zweiten Touchscreens (190b) zu liefern, der den Bildanzeigebereich ausgeschaltet hat.

9. Mobile Vorrichtung (100) nach Anspruch 4, wobei die Steuerung (110) ferner konfiguriert ist, um eine Stromversorgung zu steuern, um Strom an einen Teil eines Berührungsfeldes des zweiten Touchscreens (190b) zu liefern, der den Bildanzeigebereich ausgeschaltet hat, der dem berührungserkennbaren Bereich entspricht.

10. Mobile Vorrichtung (100) nach Anspruch 4, wobei die Steuerung (110) ferner konfiguriert ist, um eine visuelle Rückmeldung über den ersten Touchscreen (190a), eine auditive Rückmeldung über einen Lautsprecher (163a) und/oder eine taktile Rückmeldung über einen Vibrationsmotor (164) als Reaktion auf die Erkennung der zweiten Berührung auf dem berührungserkennbaren Bereich des zweiten Touchscreens (190b) bereitzustellen.

## Revendications

1. Procédé de commande d'un dispositif mobile comprenant (100) plusieurs écrans tactiles, le procédé comprenant :
calculer (S320) un angle entre un premier boîtier (100a) comprenant un premier écran tactile (190a) et un deuxième boîtier (100b) comprenant un deuxième écran tactile (190b), le deuxième boîtier (100b) étant connecté de manière rotative au premier boîtier (100a) ; et
si l'angle calculé est supérieur à un seuil, éteindre (S330) une zone d'affichage d'image du deuxième écran tactile (190b), exécuter (S350) une application en réponse à un premier toucher appliqué (S340) à une icône affichée sur le premier écran tactile (190a), détecter (S360) un deuxième toucher dans une zone détectable au toucher de la zone d'affichage d'image éteinte du deuxième écran tactile (190b), et commander (S370) l'application en réponse à la détection du deuxième toucher,
**caractérisé en ce que**
une taille et un emplacement de la zone détectable au toucher sur le deuxième écran tactile (190b) sont déterminés selon un attribut de l'application, où la taille de la zone détectable au toucher est inférieure à une taille du deuxième écran tactile (190b).

2. Procédé selon la revendication 1, où un emplacement de la zone détectable au toucher sur le deuxième écran tactile (190b) est déterminé selon une orientation du dispositif mobile (100).

3. Procédé selon la revendication 1, comprenant en outre la fourniture d'au moins l'un parmi un retour visuel, un retour auditif et un retour tactile, en réponse à la détection du deuxième toucher sur la zone détectable au toucher.

4. Dispositif mobile (100) comprenant plusieurs écrans tactiles, le dispositif mobile (100) comprenant :
un premier boîtier (100a) comprenant un premier écran tactile (190a) ;
un deuxième boîtier (100b), connecté de manière rotative au premier boîtier (100a), comprenant un deuxième écran tactile (190b) ;
un capteur (174) pour détecter un angle entre le premier boîtier (100a) et le deuxième boîtier (100b) ; et
un contrôleur (110) configuré pour :
calculer (S320) l'angle entre les premier (100a) et deuxième (100b) boîtiers tournant l'un par rapport à l'autre, en utilisant le capteur (174), et
si l'angle calculé est supérieur à un seuil, éteindre (S330) une zone d'affichage d'image du deuxième écran tactile, exécuter (S350) une application en réponse à un premier toucher appliqué (S340) à une icône affichée sur le premier écran tactile (190a), détecter (S360) un deuxième toucher dans une zone détectable au toucher de la zone d'affichage d'image éteinte du deuxième écran tactile (190b), et commander (S370) l'application en réponse au deuxième toucher détecté,
**caractérisé en ce que**
une taille et un emplacement de la zone détectable au toucher sur le deuxième écran tactile sont déterminés selon un attribut de l'application, où la taille de la zone détectable au toucher est inférieure à une taille du deuxième écran tactile (190b).

5. Dispositif mobile (100) selon la revendication 4,
où les premier (100a) et deuxième (100b) boîtiers sont connectés l'un à l'autre via au moins l'une parmi une charnière (100c1, 100c2) et une carte de circuit imprimé flexible, PCB.

6. Dispositif mobile (100) selon la revendication 5, où le capteur (174) est situé au niveau d'au moins l'un parmi le premier boîtier (100a), le deuxième boîtier (100b) et la charnière (100c1, 100c2).

7. Dispositif mobile (100) selon la revendication 4, où le contrôleur (110) est en outre configuré pour commander une alimentation électrique permettant de limiter la puissance fournie à un panneau d'affichage du deuxième écran tactile (190b), si l'angle calculé est supérieur à un seuil.

8. Dispositif mobile (100) selon la revendication 4, où le contrôleur (110) est en outre configuré pour commander une alimentation électrique permettant de fournir de la puissance à un panneau tactile du deuxième écran tactile (190b) qui a éteint la zone d'affichage d'image.

9. Dispositif mobile (100) selon la revendication 4, où le contrôleur (110) est en outre configuré pour commander une alimentation électrique permettant de fournir de la puissance à une partie d'un panneau tactile du deuxième écran tactile (190b) qui a éteint la zone d'affichage d'image, correspondant à la zone détectable au toucher.

10. Dispositif mobile (100) selon la revendication 4, où le contrôleur (110) est en outre configuré pour fournir au moins l'un parmi un retour visuel via le premier écran tactile (190a), un retour auditif via un haut-parleur (163a) et un retour tactile via un moteur de vibration (164), en réponse à la détection du deuxième toucher sur la zone détectable au toucher du deuxième écran tactile (190b).
